(19) **Europäisches Patentamt European Patent Office Office européen des brevets**

(11) **EP 2 911 380 B1**

(12) **EUROPEAN PATENT SPECIFICATION**

(45) Date of publication and mention
of the grant of the patent:
**17.04.2019 Bulletin 2019/16**

(51) Int Cl.:
*H04N 3/08* (2006.01)   *H04N 9/31* (2006.01)

(21) Application number: **15156410.1**

(22) Date of filing: **24.02.2015**

(54) **INCLINING ACTION DEVICE, OPTICAL SCANNER EMPLOYING THE INCLINING ACTION DEVICE, AND IMAGE DISPLAYING APPARATUS EMPLOYING THE INCLINING ACTION DEVICE**

NEIGWIRKUNGSVORRICHTUNG, OPTISCHER ABTASTER MIT DER NEIGWIRKUNGSVORRICHTUNG UND ANZEIGEVORRICHTUNG MIT DER NEIGWIRKUNGSVORRICHTUNG

DISPOSITIF D'ACTION D'INCLINAISON, LECTEUR OPTIQUE UTILISANT LE DISPOSITIF D'ACTION D'INCLINAISON ET APPAREIL D'AFFICHAGE D'IMAGE UTILISANT LE DISPOSITIF D'ACTION D'INCLINAISON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2014 JP 2014033666**

(43) Date of publication of application:
**26.08.2015 Bulletin 2015/35**

(73) Proprietor: **Ricoh Company, Ltd.
Tokyo 143-8555 (JP)**

(72) Inventor: **Takahashi, Hiroyuki
Tokyo 143-8555 (JP)**

(74) Representative: **J A Kemp
14 South Square
Gray's Inn
London WC1R 5JJ (GB)**

(56) References cited:
WO-A1-2013/125233    WO-A1-2013/125256
JP-A- 2008 028 756    US-A1- 2011 116 054
US-A1- 2012 001 961    US-A1- 2013 083 378

**Description**

BACKGROUND

Technical Field

Exemplary embodiments of the present disclosure generally relate to an inclining action device that inclines a moving member elastically supported by a fixing frame, an optical scanner employing the inclining action device, and an image displaying apparatus employing the inclining action device.

Description of the Related Art

An example of an inclining action device (hereinafter may be referred to as inclining device) that is well known is one that is employed in an optical scanner. The inclining device inclines an optical member, such as a mirror or the like, and scans light outputted from a light outputting unit. Such optical scanners are employed in image displaying apparatuses as, for example, a scanning unit that scans with an image scanning light based on image information (See JP-2010-26443-A, JP-2011-107505-A). In such conventional image displaying apparatuses, an optical member to scan light is provided at a moving member that is elastically supported by a fixing frame. By repeatedly performing an inclining action to change an inclination angle of the moving member with respect to the fixing frame, scanning of an image in a horizontal direction is achieved.

The inclining action on the moving member is performed with a piezoelectric element provided at an elastic supporting member that elastically supports the moving member with respect to the fixing frame. More specifically, the inclining action is conducted by inputting a driving signal to the piezoelectric element causing the piezoelectric element to expand or contract which in turn bends the elastic supporting member. According to bend of the elastic supporting member, a rotational torque around a predetermined rotation axis at the moving member is generated. Accordingly, the inclination angle of the moving member changes with respect to the fixing frame. The inclination angle of the moving member is determined by the amount of bend on the elastic supporting member. More specifically, the inclination angle of the moving member is determined by the amount of expansion or contraction of the piezoelectric element. Thus, the inclining action on the moving member can be controlled by changing a voltage of the driving signal input to the piezoelectric element.

However, the inventor of the present invention has discovered that, when repeatedly performing the inclining action on the moving member that is elastically supported by the fixing frame, in one inclination action to incline the moving member from one position to another position, an inclination angle of the moving member tends to fluctuate with respect to a desired inclination angle for each point of time. Various reasons are conceivable as to why such fluctuation in inclining angle occurs. At least one conceivable reason is generation of elastic vibration on an elastic portion supporting the moving member to the fixing frame as the inclining action is repeatedly performed on the moving member. With generation of elastic vibration, an inclination angle of the moving member fluctuates with respect to a desired inclination angle in every one inclining action on the moving member.

WO 2013/125233 A1 discloses an inclining action device wherein the driving force applying unit employs at least two driving elements driven in opposite phase.

SUMMARY

An object of the present invention is to provide a novel inclining action device (hereinafter may be referred to as inclining device) that suppresses fluctuation in an inclination angle of a moving member with respect to a desired inclination angle, which can be observed over time in every inclining action, to achieve an appropriate inclination angle of the moving member; an optical scanner employing the inclining device; and an image displaying apparatus employing the inclining device.

The present invention provides an inclining action device, an optical scanner and an image displaying apparatus as defined by the appended claims.

Accordingly, the inclining device suppresses fluctuation in the inclination angle of the moving member with respect to the desired inclination angle, which can be observed over time in every inclining action, to achieve the appropriate inclination angle of the moving member.

These and other aspects, features, and advantages will be more fully apparent from the following detailed description of illustrative embodiments, the accompanying drawings, and associated claims.

BRIEF DESCRIPTION OF THE DRAWINGS

The aforementioned and other aspects, features, and advantages of the present disclosure will be better understood by reference to the following detailed description when considered in connection with the accompanying drawings, wherein:

FIG. 1 is a block diagram of an example of a configuration of an actuator driving system according to an embodiment of the present invention;

FIG. 2 is a plan view of an example of a frame plate of an actuator in the actuator driving system of FIG. 1;

FIG. 3 is a plan view for illustrating dispositions of driving piezoelectric elements and sensing piezoelectric elements attached to a plurality of elastically deforming portions of the frame plate of FIG. 2;

FIG. 4 is a plan view for illustrating electric connections of the driving piezoelectric elements and the sensing piezoelectric elements;

FIG. 5 is schematic view for explaining a relation of waveforms of driving signals for a sub-scanning direction applied to the driving piezoelectric elements with an inclination angle of a mirror formed on a moving member in a Y-direction (i.e., sub-scanning direction);

FIG. 6 is schematic view of an example of the inclined mirror and each of the elastically deforming portions of the frame plate at a time T0 and a time T5;

FIG. 7 is schematic view of an example of the inclined mirror and each of the elastically deforming portions of the frame plate 10 at a time T4;

FIG. 8 is a schematic view of an example of a reflected direction of an incident light that is incident to the inclined mirror at the time T0 and the time T5;

FIG. 9 is a schematic view of an example of a reflected direction of an incident light that is incident to the inclined mirror at the time T4;

FIG. 10 is schematic view of an example of a relation of a waveform of a driving signal for a main scanning direction applied to the driving piezoelectric elements with an inclination angle of the mirror formed on the moving member in a X-direction (i.e., main scanning direction);

FIG. 11 is an illustration for explaining scanning of an image in which inclining actions in the main scanning direction and the sub-scanning direction are appropriately performed;

FIG. 12 is a graph illustrating the desired temporal change in the sensing signals for the inclining action in the sub-scanning direction;

FIG. 13 is a graph illustrating the temporal change in the sensing signals for the inclining action in the sub-scanning direction, in which actual inclination angles of the moving member fluctuate with respect to target inclination angles;

FIG. 14 is an illustration for explaining scanning of an image in which the inclining action in the sub-scanning direction is inappropriate, and sparse and dense lines with respect to scanning lines occurs;

FIG. 15 is a flowchart illustrating operation of correcting performed by the inclining action device according to an embodiment of the present invention;

FIG. 16 is a graph illustrating an example correction operation performed by the inclining action device according to an embodiment of the present invention;

FIG. 17 is a graph illustrating initial states of a first sub-scanning driving signal Va and a second sub-scanning driving signal Vb;

FIG. 18 is a graph illustrating states of the first sub-scanning driving signal Va and the second sub-scanning driving signal Vb after adjustment;

FIG. 19 is a flowchart showing another example of the process of the adjustment process in the inclining action device according to an embodiment of the present invention;

FIG. 20 is a graph illustrating initial states of the first sub-scanning driving signal Va and the second sub-scanning driving signal Vb;

FIG. 21 is a graph illustrating states of the first sub-scanning driving signal Va and the second sub-scanning driving signal Vb after correction;

FIG. 22 is a schematic view of an example of a configuration of a head-up display (HUD) for an automobile, provided in the automobile, including an optical scanner that is the actuator driving system employing the inclining device according to an embodiment of the present invention;

FIG. 23 is a schematic view of an example of a configuration of the inside of the HUD for the automobile including the optical scanner that is the actuator driving system employing the inclining device according to an embodiment of the present invention; and

FIG. 24 is a schematic view of an example of an image displayed by the HUD for the automobile.

The accompanying drawings are intended to depict exemplary embodiments of the present disclosure and should not be interpreted to limit the scope thereof. The accompanying drawings are not to be considered as drawn to scale unless explicitly noted.

DETAILED DESCRIPTION

Hereinafter, exemplary embodiments of the present invention are described in detail with reference to the drawings. However, the present invention is not limited to the exemplary embodiments described below, but may be modified and improved within the scope of the present disclosure.

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results.

In a later-described comparative example, illustrative embodiment, and alternative example, for the sake of simplicity, the same reference numerals will be given to constituent elements such as parts and materials having the same functions, and redundant descriptions thereof omitted.

Described herein are exemplary embodiments of a novel inclining action device (hereinafter may be referred to as inclining device) that suppresses fluctuation in an inclination angle of a moving member with respect to a desired inclination angle, which can be observed over time in every inclining action, to achieve an appropriate inclination angle of the moving member; an optical scanner employing the inclining device; and an image displaying apparatus employing the inclining device.

The following is a detailed description of an example of the inclining device according to an embodiment of the present invention applied to an actuator driving system serving as the optical scanner of the image displaying apparatus.

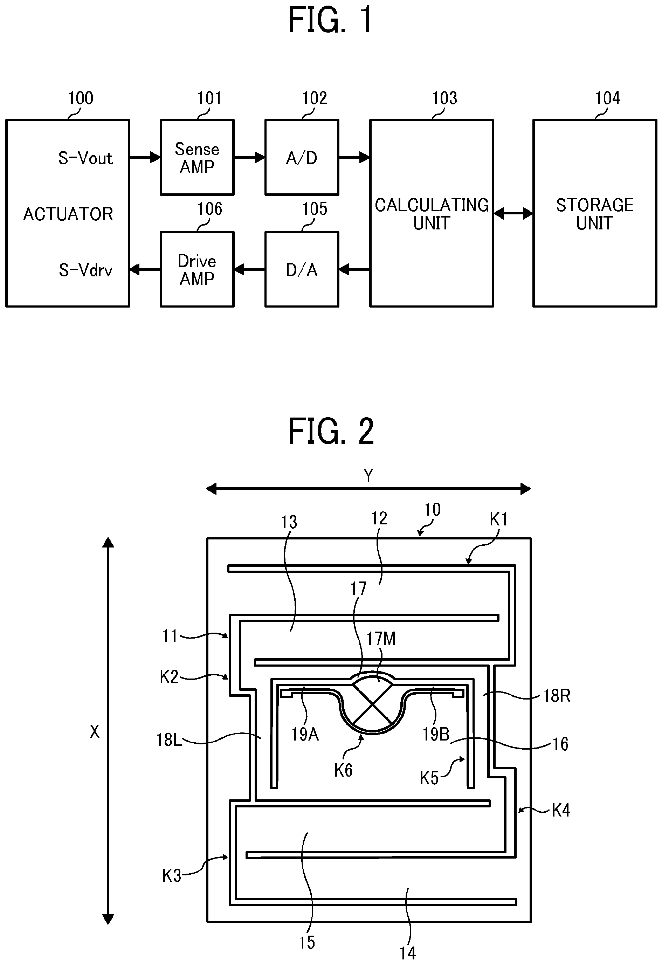

FIG. 1 is a block diagram of an example of a configuration of the actuator driving system that conducts two-dimensional scanning with a laser light.

The actuator driving system according to an embodiment of the present invention includes a sense amplifier 101 (hereinafter referred to as sense AMP) to amplify a sensing signal, an analog-to-digital converter 102 (hereinafter referred to as A/D converter) for sensing, a calculating unit 103, a storage unit 104, a digital-to-analog converter 105 (hereinafter referred to as D/A converter) for driving, and a drive amplifier 106 (hereinafter referred to as drive AMP) to amplify a driving signal.

From an S-Vout terminal of an actuator 100, the sensing signal that is inclination angle information indicating the inclination angle of the moving member is output to the sense AMP 101. Then, the sensing signal is amplified by the sense AMP 101, converted from an analog signal to a digital signal with the A/D converter 102, and input to the calculating unit 103. The calculating unit 103 stores data of the sensing signal, inputted from the A/D converter 102, in the storage unit 104. The calculating unit 103 further outputs data of the driving signal to the D/A converter 105. At the D/A converter 105, the data of the driving signal is converted from a digital signal to an analog signal, and outputted to the drive AMP 106. The drive AMP 106 amplifies the driving signal and inputs the amplified driving signal to an S-Vdrv terminal of the actuator 100. Accordingly, the actuator 100 is driven.

FIG. 2 is a plan view of an example of a frame plate 10 of the actuator 100 according to an embodiment of the present invention.

The frame plate 10 is provided to scan light in two directions. More specifically, the frame plate 10 moves to scan light in an X-direction corresponding to a main scanning direction and a Y-direction corresponding to a sub-scanning direction. The frame plate 10 of the actuator 100 according to an embodiment of the present invention includes a fixing frame 11 formed at an outer circumference of the frame plate 10 by a plurality of slits K1 to K6 (hereinafter may be referred to as first slit K1, second slit K2, third slit K3, ..., and sixth slit K6) in the frame plate 10, a plurality of elastically deforming portions 12 to 16 (hereinafter may be referred to as first elastically deforming portion 12, second elastically deforming portion 13, third elastically deforming portion 14, ..., and fifth elastically deforming portion 16) within the fixing frame 11, and a moving member 17.

The first elastically deforming portion 12 is joined to the fixing frame 11 at one end portion. The other end portion of the first elastically deforming portion 12 is joined to one end portion of the second elastically deforming portion 13. More specifically, with the first slit K1 and the second slit K2, a turning-back structure is formed by the first elastically deforming portion 12 and the second elastically deforming portion 13. The third elastically deforming portion 14 is joined to the fixing frame 11 at one end portion. The other end portion of the third elastically deforming portion 14 is joined to one end portion of the fourth elastically deforming portion 15. More specifically, with the third slit K3 and the fourth slit K4, a turning-back structure is formed by the third elastically deforming portion 14 and the fourth elastically deforming portion 15.

An arm portion 18L is continuously formed from the other end portion of the second elastically deforming portion 13 extending in a downward direction of FIG. 2. An end portion at the extending direction of the arm portion 18L is joined to one end portion of the fifth elastically deforming portion 16. The other end portion of the fourth elastically deforming portion 15 is joined to the other end portion of the fifth elastically deforming portion 16. More specifically, the other end portion of the fourth elastically deforming portion 15 is joined to a lower part, in relation to the viewpoint of FIG. 2, of the fifth elastically deforming portion 16. In addition, an inverted L-shape arm portion 18R is continuously formed from the other end portion of the fourth elastically deforming portion 15. An end portion of the arm portion 18R extending from the other end portion of the fourth elastically deforming portion 15 is joined to the other end portion of the second elastically deforming portion 13.

At an upper part of the fifth elastically deforming portion 16 illustrated in FIG. 2, the fifth slit K5 and the sixth slit K6 together form thin supporting portions 19A and 19B that extend in a horizontal and vertical direction, which support the moving member 17. The moving member 17 has a surface formed with the mirror 17M serving as an optical member. The moving member 17 inclines with the fifth elastically deforming portion 16 in a left and right direction in FIG. 2, as a rotational torque is applied around an axis parallel to the X-direction due to elastic deformation of the first to fourth elastically deforming portions 12 to 15. The axis parallel to the X-direction is an axis in X-direction that runs through substantially a center of the mirror 17M formed on the moving member 17. In addition, the moving member 17 inclines in an up and down direction in FIG. 2 as a rotational torque is applied around an axis parallel to the Y-direction due to elastic deformation of the fifth elastically deforming portion 16. The axis parallel to the Y-direction runs through substantially a center of the mirror 17M formed on the moving member 17.

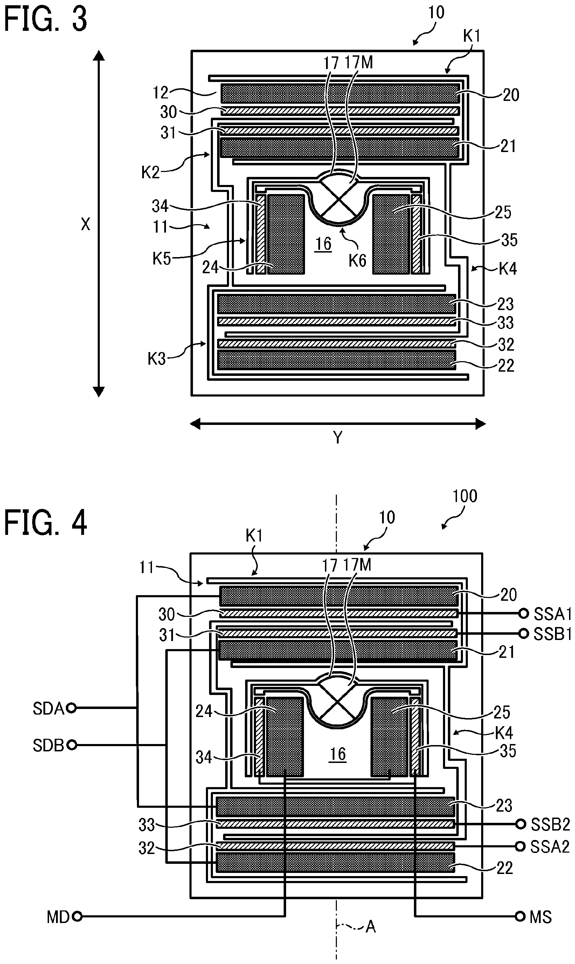

FIG. 3 is a plan view of an example of dispositions of driving piezoelectric elements 20 to 25 (hereinafter may be referred to as first driving piezoelectric element 20, ..., and sixth driving piezoelectric element 25) and sensing piezoelectric elements 30 to 35 (hereinafter may be referred to as first sensing piezoelectric element 30, ..., and sixth sensing piezoelectric element 35) attached to the plurality of elastically deforming portions 12 to 16 of the frame plate 10.

At each surface of the first to fourth elastically deforming portions 12 to 15, the first driving piezoelectric element 20 to the fourth driving piezoelectric element 23 serving as driving units for applying driving force for elastic deformation are attached, respectively. In addition, at each surface of the first elastically deforming portion 12 to the fourth elastically deforming portion 15, the first sensing piezoelectric element 30 to the fourth sensing piezoelectric element 33 are attached, respectively, so as to be adjacent to the first driving piezoelectric element 20 to the fourth driving piezoelectric element 23, respectively. The first sensing piezoelectric element 30 to the fourth sensing piezoelectric element 33 function as inclination angle information sensing units, which sense, as inclination angle information of the moving member 17, an amount of elastic deformation of the first elastically deforming portion 12 to the fourth elastically deforming portion 15, respectively.

The fifth driving piezoelectric element 24 and the sixth driving piezoelectric element 25, which functions as a different direction inclining unit, are attached on a left side and a right side at a surface of the fifth elastically deforming portion 16, respectively, as illustrated in FIG. 2. In addition, at the surface of the fifth elastically deforming portion 16, the fifth sensing piezoelectric element 34 and the sixth sensing piezoelectric element 35 are provided adjacent to the fifth driving piezoelectric element 24 and the sixth driving piezoelectric element 25, respectively. The fifth sensing piezoelectric element 34 and the sixth sensing piezoelectric element 35 sense an amount of elastic deformation of the fifth elastically deforming portion 16.

FIG. 4 is a plan view of an example of electric connections of the driving piezoelectric elements 20 to 25 and the sensing piezoelectric elements 30 to 35.

A surface electrode of the first driving piezoelectric element 20 and a surface electrode of the fourth driving piezoelectric element 23 are connected to a shared input terminal SDA. A surface electrode of the second driving piezoelectric element 21 and a surface electrode of the third driving piezoelectric element 22 are connected to a shared input terminal SDB. A surface electrode of the fifth driving piezoelectric element 24 and a surface electrode of the sixth driving piezoelectric element 25 are connected to a shared input terminal MD. Back surface electrodes (i.e., electrode at a back/reverse surface with respect to the surface electrode) of the first driving piezoelectric elements 20 to the sixth driving piezoelectric elements 25 are connected to a ground line. As illustrated in FIG. 1, the input terminals SDA, SDB, and MD are connected to the S-Vdrv terminal of the actuator 100, and output driving signals to the S-Vdrv terminal.

Surface electrodes of the first to fourth sensing piezoelectric elements 30 to 33 are connected to output terminals SSA1, SSA2, SSB1, and SSB2, respectively. The first to fourth sensing piezoelectric elements 30 to 33 output sensing signals (i.e., sensed electric currents) that correspond to an amount of elastic deformation of the first to fourth elastically deforming portions 12 to 15, respectively, from the output terminals SSA1, SSA2, SSB1, and SSB2. A surface electrode of the fifth sensing piezoelectric element 34 and a surface electrode of the sixth sensing piezoelectric element 35 are connected to a shared output terminal MS. A sensing signal (i.e., sensed electric current) according to an amount of elastic deformation of the fifth elastically deforming portion 16 is outputted from the fifth sensing piezoelectric element 34 and the sixth sensing piezoelectric element 35. Then, the outputted sensing signal is outputted from the shared output terminal MS.

The following is a description of an inclining action of the mirror 17M formed on the moving member 17 in the Y-direction (i.e., sub-scanning direction).

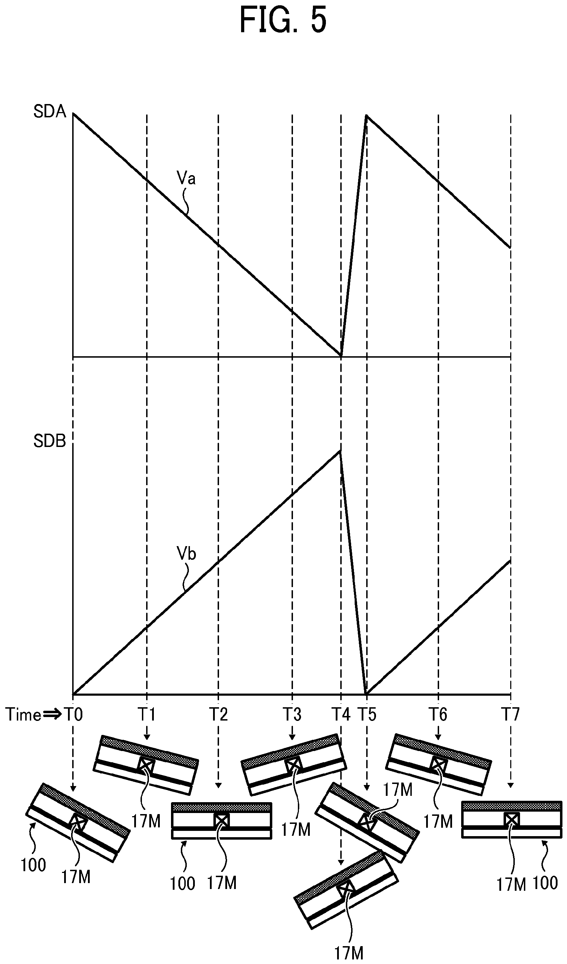

FIG. 5 is schematic view of an example of a relation of waveforms of driving signals for the sub-scanning direction applied to the driving piezoelectric elements 20 to 23 and an inclination angle of the mirror 17M formed on the moving member 17 in the Y-direction (i.e., sub-scanning direction).

For example, the driving signals for the sub-scanning direction inputted from the input terminals SDA and SDB may be a voltage signal Va (hereinafter may be referred to as first sub-scanning driving signal Va) and a voltage signal Vb (hereinafter may be referred to as second sub-scanning driving signal Vb), respectively. Both, the voltage signal Va and the voltage signal Vb have sawtooth-like waveforms as shown in FIG. 5. The first sub-scanning driving signal Va is applied to the first driving piezoelectric element 20 and the fourth driving piezoelectric element 23 via the input terminal SDA. The second sub-scanning driving signal Vb is applied to the second driving piezoelectric element 21 and the third driving piezoelectric element 22 via the input terminal SDB. As shown in FIG. 5, the first sub-scanning driving signal Va and the second sub-scanning driving signal Vb have waveforms with phases that are 180 degree inversions of each other.

As the first sub-scanning driving signal Va and the second sub-scanning driving signal Vb are applied, the driving piezoelectric elements 20 to 23 expand or contract according to a voltage of the first sub-scanning driving signal Va and a voltage of the second sub-scanning driving signal Vb. Accordingly, the first to fourth elastically deforming portions 12 to 15 bend according to the expansion or contraction. Accordingly, the moving member 17 inclines in the Y-direction (i.e., sub-scanning direction) with respect to the fixing frame 11. More specifically, the mirror 17M formed on the moving member 17 rotates around the axis (i.e., axis A shown in FIG. 4) parallel to the X-direction running through substantially the center of the mirror 17M.

As shown in FIG. 5, at a time T0, a voltage value of the first sub-scanning driving signal Va is a maximum voltage and a voltage value of the second sub-scanning driving signal Vb is a minimum (i.e., zero) voltage. At the time T0, the mirror 17M is at its maximum inclination angle in a right direction of FIG. 5, with respect to the X-direction axis (i.e., axis A shown in FIG. 4) running through substantially the center of the mirror 17M. At a time T1, a voltage value of the first sub-scanning driving signal Va is approximately 3/4 of the maximum voltage and a voltage value of the second sub-scanning driving signal Vb is approximately 1/4 of a maximum voltage. At the time T1, the mirror 17M has a midway inclination angle that is approximately between the maximum inclination angle in the right direction of FIG. 5, and an inclination angle of zero in which the moving member 17 is at an approximate horizontal state with respect to the fixing frame 11. At a time T2, a voltage value of the first sub-scanning driving signal Va is approximately 1/2 of the maximum voltage and a voltage value of the second sub-scanning driving signal Vb is approximately 1/2 of the maximum voltage. The first sub-scanning driving signal Va and the second sub-scanning driving signal Vb have approximately the same voltage values. Accordingly, at the time T2, an inclination angle of the mirror 17M is zero.

At a time T3, a voltage value of the first sub-scanning driving signal Va is approximately 1/4 of the maximum voltage and a voltage value of the second sub-scanning driving signal Vb is approximately 3/4 of a maximum voltage. At the time T3, the mirror 17M has a midway inclination angle that is approximately between the maximum inclination angle in a left direction of FIG. 5, and an inclination angle of zero. At a time T4, a voltage value of the first sub-scanning driving signal Va is a minimum voltage (i.e., zero) and a voltage value of the second sub-scanning driving signal Vb is the maximum voltage. At the time T4, the mirror 17M is at its maximum inclination angle in the left direction, in relation to the viewpoint of FIG. 5. At a time T5, a voltage value of the first sub-scanning driving signal Va is the maximum voltage and a voltage value of the second sub-scanning driving signal Vb is the minimum voltage (i.e., zero). Accordingly, an inclination angle of the mirror 17M at the time T5 is the same as the time T0. The inclining action of the mirror 17M from time T to time T5 is repeated.

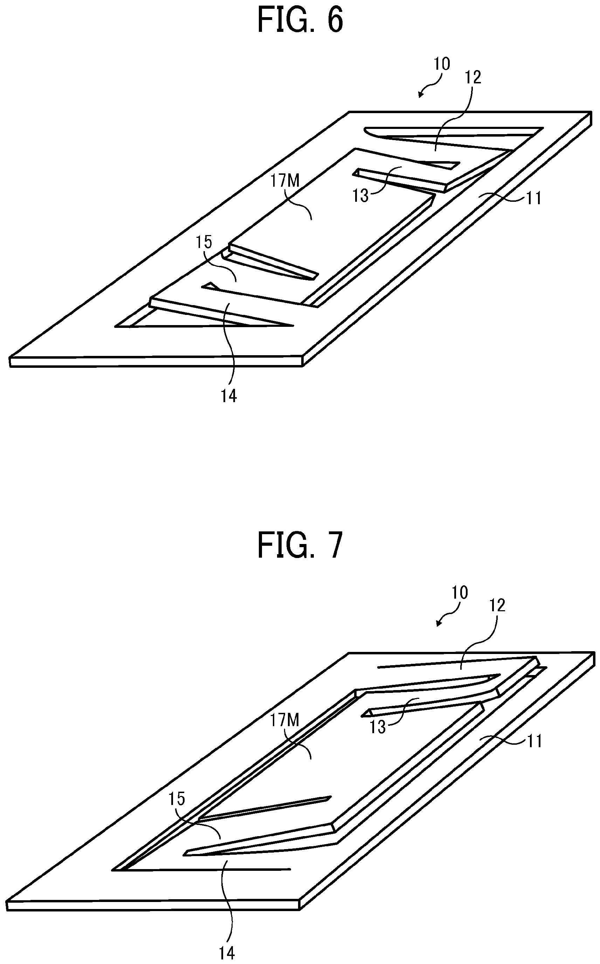

FIG. 6 is schematic view of an example of an inclining state of the mirror 17M and an elastic deformation state of the elastically deforming portions 12 to 16 of the frame plate 10 at the time T0 and the time T5.

FIG. 7 is schematic view of an example of an inclining state of the mirror 17M and an elastic deformation state of the elastically deforming portions 12 to 16 of the frame plate 10 at the time T4.

At the time T0 and the time T5, maximum contraction occurs to the first driving piezoelectric element 20 and the fourth driving piezoelectric element 23 when the first sub-scanning driving signal Va is inputted. Accordingly, a maximum deformation state occurs to the first elastically deforming portion 12 and the fourth elastically deforming portion 15. At the time T4, maximum contraction occurs to the second driving piezoelectric element 21 and the third driving piezoelectric element 22 when the second sub-scanning driving signal Vb is inputted. Accordingly, a maximum deformation state occurs to the second elastically deforming portion 13 and the third elastically deforming portion 14.

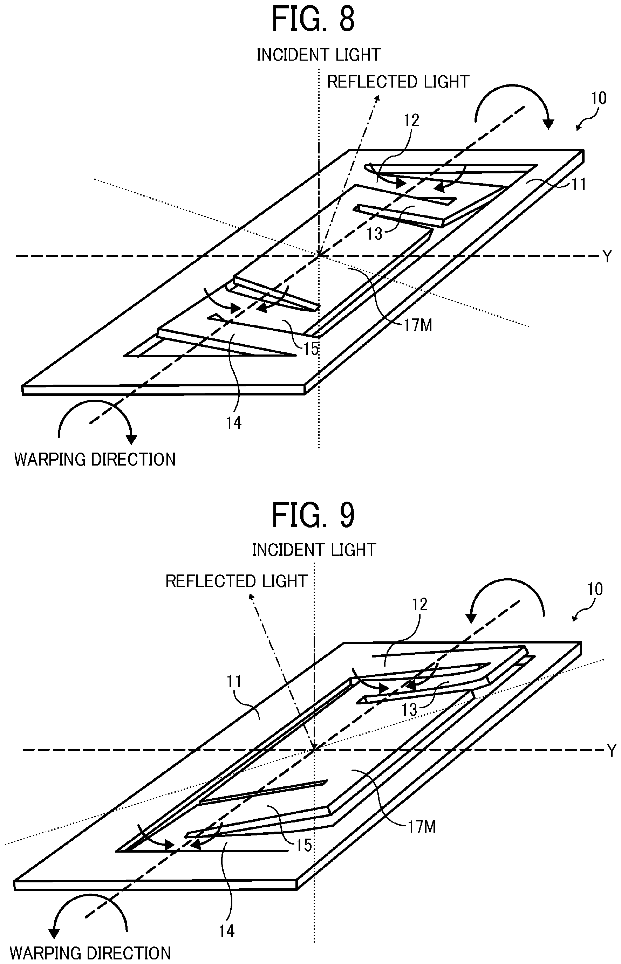

FIG. 8 is a schematic view of an example of a reflected direction of an incident light with respect to the mirror 17M with the inclination angle at the time T0 and the time T5.

FIG. 9 is a schematic view of an example of a reflected direction of an incident light with respect to the mirror 17M with the inclination angle at the time T4.

As shown in FIG. 6 and FIG. 7, it is understood that when the first sub-scanning driving signal Va and the second sub-scanning driving signal Vb, described in FIG.5, are applied to the first to fourth elastically deforming portions 12 to 15, the first to fourth elastically deforming portions 12 to 15 bend and the mirror 17M formed on the moving member 17 rotates around the axis (i.e., axis A shown in FIG. 4) parallel to the X-direction running through the approximate center point of the mirror 17M. Accordingly, as shown in FIG. 8 and FIG.9, it is understood that the incident light to the mirror 17M is scanned in the Y-direction (i.e., sub-scanning direction).

It is to be noted that, in the inclining device according to an embodiment of the present invention, a frequency of the first sub-scanning driving signal Va and the second sub-scanning driving signal Vb may be set at approximately several tens of hertz (Hz). Generally, when the inclining device according to an embodiment of the present invention is employed for optical scanning in a vertical direction of an image of an image displaying apparatus, that displays an image or video, a frequency is set to approximately 60 to 70 Hz.

The following is a description of the inclining action of the mirror 17M formed on the moving member 17 in the X-direction (i.e., main scanning direction).

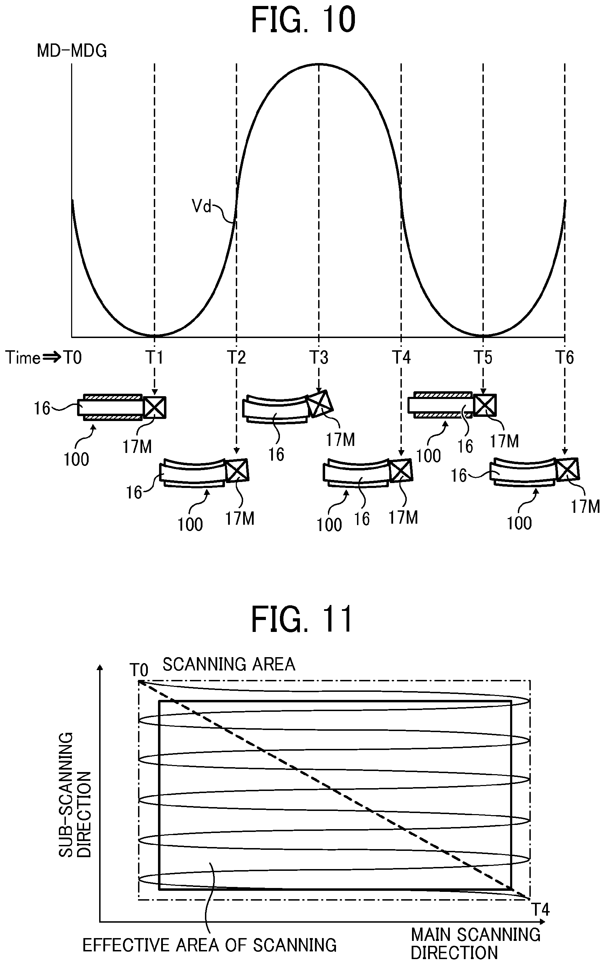

FIG. 10 is schematic view of an example of a relation of a waveform of a driving signal for the main scanning direction applied to the driving piezoelectric elements 24 and 25 and an inclination angle of the mirror 17M formed on the moving member 17 in the X-direction (i.e., main scanning direction).

For example, the driving signal for the main scanning direction inputted from the input terminal MD may be a voltage signal Vd (hereinafter may be referred to as main scanning driving signal Vd). The voltage signal Vd has a sine waveform as shown in FIG. 10. FIG. 11 is a schematic view of an example of scanning of an image in which both inclining actions of the main scanning direction and the sub-scanning direction are appropriate. As shown in FIG. 11, in a raster scan action, with respect to one inclining action in the sub-scanning direction, multiple inclining actions (e.g., 525 times) in the main scanning direction are conducted. Thus, it is preferable that the inclining action in the main scanning direction largely inclines while requiring little energy as possible. Therefore, in the inclining device according to an embodiment of the present invention, the driving signal for the main scanning direction is made a resonant frequency that obtains a resonant action with respect to elastic deformation of the sixth driving piezoelectric element 25.

When the main scanning driving signal Vd is applied, the driving piezoelectric elements 24 and 25 expand or contract according to a voltage value of the main scanning driving signal Vd. Accordingly, the fifth elastically deforming portion 16 bends according to the expansion or contraction. Accordingly, the moving member 17 inclines in the X-direction (i.e., main scanning direction) with respect to the fixing frame 11. More specifically, the mirror 17M formed on the moving member 17 rotates around the axis parallel to the Y-direction running through the approximate center point of the mirror 17M.

As shown in FIG. 10, at a time T1, a voltage value of the main scanning driving signal Vd is zero. Accordingly, the mirror 17M has an inclination angle of zero in which the moving member 17 is at an approximate horizontal state with respect to the fixing frame 11. At a time T2, a voltage value of the main scanning driving signal Vd is approximately 1/2 of a maximum voltage. At the time T2, the mirror 17M has a midway inclination angle that is approximately between the maximum inclination angle in a left direction, in relation to the viewpoint of FIG. 10, and the inclination angle of zero. At a time T3, a voltage value of the main scanning driving signal Vd is the maximum voltage. At the time T3, the mirror 17M is at its maximum inclination angle in the left direction, in relation to the viewpoint of FIG. 10.

At a time T4, a voltage value of the main scanning driving signal Vd is approximately 1/2 of the maximum voltage. At the time T4, like the time T2, the mirror 17M has the midway inclination angle that is approximately between the maximum inclination angle in the left direction, in relation to the viewpoint of FIG. 10, and the inclination angle of zero. At a time T5, a voltage value of the main scanning driving signal Vd is zero. Accordingly, like the time T1, the mirror 17M has the inclination angle of zero. From the time T5, the inclining action of the mirror 17M is a repetition of the inclining action at time T0 to the time T5.

It is to be noted that in the above-described inclining device according to an embodiment of the present invention, the driving piezoelectric elements 20 to 25 and the sensing piezoelectric elements 30 to 35 are provided at one side of a surface of the frame plate 10. However, there is more freedom in forming the driving piezoelectric elements 20 to 25, the sensing piezoelectric elements 30 to 35, and wiring. The driving piezoelectric elements 20 to 25, the sensing piezoelectric elements 30 to 35, and the wiring may be provided at the other side of the surface of the frame plate 10 or provided at both sides of the surface of the frame plate 10. Further, formation of the driving piezoelectric elements 20 to 25, the sensing piezoelectric elements 30 to 35, and the above-described electrodes may be carried out in accordance with semiconductor processes that enables cost reduction with ease by mass production.

The following is a description of an adjustment process of the first sub-scanning driving signal Va and the second sub-scanning driving signal Vb that is a feature of the present invention.

As described above, regarding the inclining action in the main scanning direction, large inclining action in the main scanning direction may be stably obtained due to the resonant action (Hereinafter may be referred to as resonance) with respect to elastic deformation of the sixth driving piezoelectric element 25. However, due to employing resonance for the inclining action in the main scanning direction, it is difficult to employ resonance for the inclining action in the sub-scanning direction. Thus, in the inclining device according to an embodiment of the present invention, the inclining action in the sub-scanning direction is non-resonance. In an inclining action that is non-resonance, an amount of elastic deformation obtained with respect to one driving piezoelectric element is small. Thus, in the inclining device according to an embodiment of the present invention, large inclining action of the moving member 17 is obtained by providing the turning-back structure at the first elastically deforming portion 12 and the second elastically deforming portion 13, providing the turning-back structure at the third elastically deforming portion 14 and the fourth elastically deforming portion 15, and making two combinations, each combination having parallel action, operate in reverse to each other. The two combinations are a combination of the first driving piezoelectric element 20 and the fourth driving piezoelectric element 23 and a combination of the second driving piezoelectric element 21 and the third driving piezoelectric element 22.

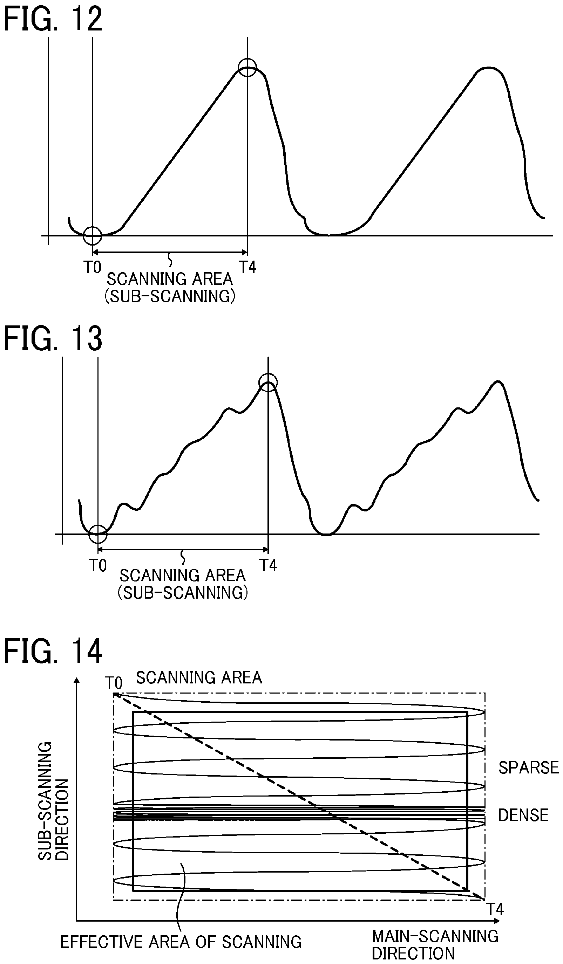

In the inclining device according to an embodiment of the present invention, the inclining action in the sub-scanning direction is conducted at a constant rate between a start arrangement (i.e., a time T0 shown in FIG. 12) of the moving member 17, including the mirror 17M, in regard to the fixing frame 11 to an end arrangement (i.e., a time T4 shown in FIG. 12) of the moving member 17, including the mirror 17M, in regard to the fixing frame 11. At the start arrangement to the end arrangement of the moving member 17, target inclination angles of the moving member 17 change according to time in a linear manner. Regarding actual inclination angles of the moving member 17, it is preferable that the actual inclination angles also change according to time in a linear manner along the target inclination angles. When the actual inclination angles of the moving member 17 also change according to time in the linear manner along the target inclination angles, sensing signals outputted from the sensing piezoelectric elements 30 to 33 change according to time in a linear manner. This is shown between the time T0 and the time T4 in FIG. 12. With output shown in FIG. 12, an optical scanning in which intervals of a main scanning line is approximately constant, as shown in FIG.11, is obtained.

However, when repeatedly conducting the inclining action of the moving member 17 by elastically deforming the fifth elastically deforming portion 16, the following occurs. Actual inclination angles, that change according to time, of the moving member 17 become larger and smaller with respect to target inclination angles, that change according to time. Thus, following capability of the actual inclination angles with respect to the target inclination angles become unfavorable. When unfavorable following occurs, sensing signals outputted from the sensing piezoelectric elements 30 to 33 that change according to time exhibit an undulating waveform, that is non-linear. This is shown between a time T0 and a time T4 in FIG. 13. Accordingly, when unfavorable following occurs, sparse and dense portions are generated in the main scanning line and density unevenness occurs to a displaying image. This is shown in FIG. 14.

A large factor that causes the above-described unfavorable following is as follows. Due to elasticity of the fifth elastically deforming portion 16, elastic vibration having a different cycle with respect to a cycle of the inclining action in the sub-scanning direction is generated when repeatedly conducting the inclining action in the sub-scanning direction. Accordingly, the generation of elastic vibration causes the actual inclination angles, that change according to time, of the moving member 17 to fluctuate with respect to the target inclination angles, that change according to time. Another conceivable factor relating to elastic vibration is that the inclining action in the sub-scanning direction is non-resonance. Due to the inclining action in the sub-scanning direction being non-resonance, an elastic vibration of the resonant frequency is likely to be generated.

In the inclining device according to an embodiment of the present invention, a configuration of driving the inclining action in the sub-scanning direction with the above-described two combinations is employed. The two combinations are the combination of the first driving piezoelectric element 20 and the fourth driving piezoelectric element 23 and the combination of the second driving piezoelectric element 21 and the third driving piezoelectric element 22. Each combination is driven by the first sub-scanning driving signal Va and the second sub-scanning driving signal Vb, respectively. Phase of the first sub-scanning driving signal Va and the phase of the second sub-scanning driving signal Vb are 180 degree inversions of each other. In a case of the above-described configuration, generating the first sub-scanning driving signal Va and the second sub-scanning driving signal Vb with waveforms having phases that are completely 180 degree inversions of each other is difficult. In addition, expansion or contraction state of the driving piezoelectric elements 20 to 23 and elastic modulus of the first to fourth elastically deforming portions 12 to 15, that are elastically deformed by the driving piezoelectric elements 20 to 23, are not uniform. Thus, obtaining a completely symmetrical elastic deformation between the above-described two combinations is not possible. This is another conceivable factor that may relate to the fluctuation of the actual inclination angles, that change according to time, of the moving member 17 with respect to the target inclination angles, that change according to time.

In view of the foregoing, when sensing signals outputted from the sensing piezoelectric elements 30 to 33 exhibit non-linearity as shown in FIG. 13, the adjustment process that corrects the first sub-scanning driving signal Va and the second sub-scanning driving signal Vb is conducted. The first sub-scanning driving signal Va and the second sub-scanning driving signal Vb are adjusted so that the sensing signals outputted from the sensing piezoelectric elements 30 to 33 exhibit linearity. The adjustment process is conducted at the calculating unit 103 serving as an adjustment processing unit shown in FIG. 1.

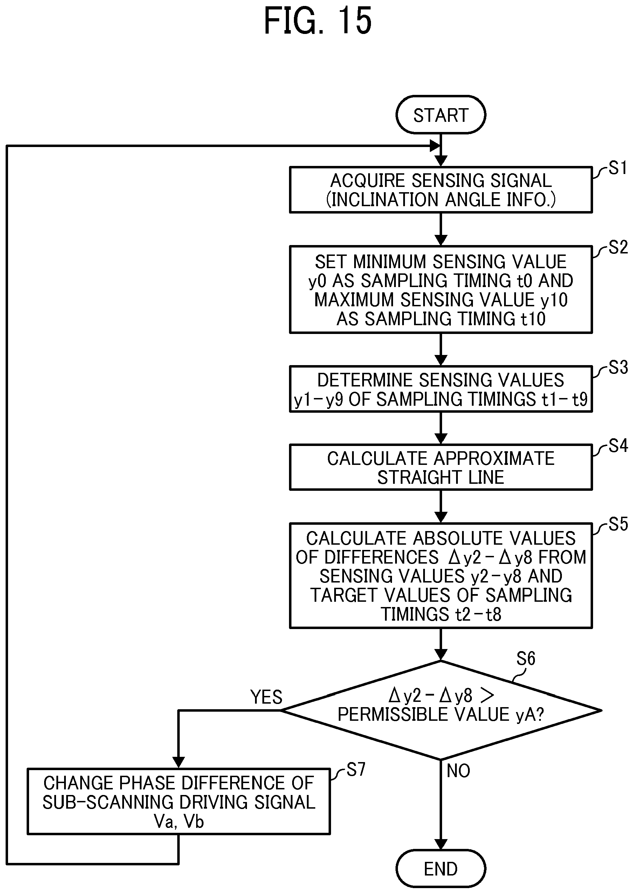

FIG. 15 is a flowchart showing an example of an adjustment process performed by the inclining device according to an embodiment of the present invention.

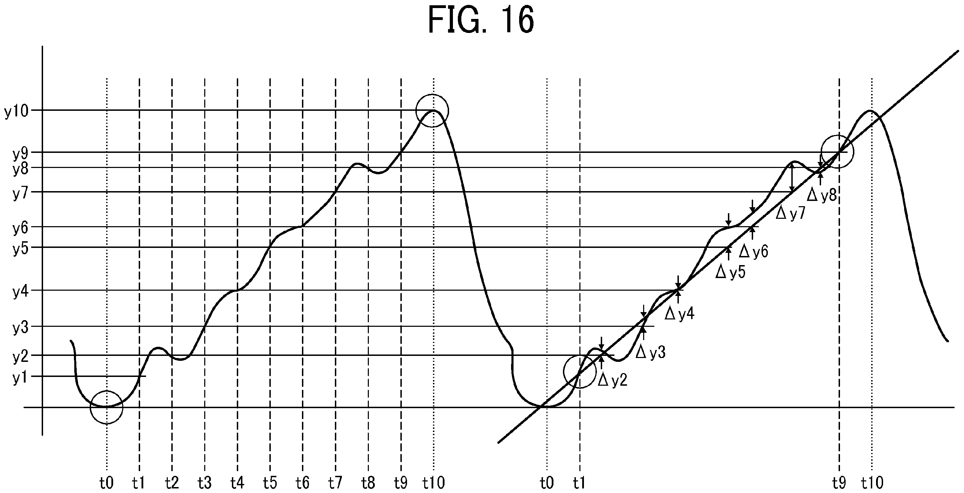

FIG. 16 is a graph showing an example of the adjustment process performed by the inclining device according to an embodiment of the present invention.

In a first step S1, the following is conducted. From a S-Vout terminal of the actuator 100, the sensing signals are outputted by the sensing piezoelectric elements 30 to 33 to the sense AMP 101. Then, the sensing signals are amplified by the sense AMP 101, converted from analog signals to digital signals with the A/D converter 102, inputted to the calculating unit 103, and stored in the storage unit 104. In a second step S2, the calculating unit 103 conducts the following. As shown in FIG. 16, with respect to a time for one sub-scanning operation ("sub-scanning time"), the sub-scanning time is divided equally into ten sections, and eleven sampling timings t0 to 10 are set. More specifically, a minimum value y0 (hereinafter may be referred to as sensing value y0) is set as the sampling timing t0, and a maximum value y10 (hereinafter may be referred to as sensing value y10) is set as the sampling timing y10. In a third step S3, the following is conducted. Sensing values y1 to y9 of the sensing signals corresponding to sampling timings t1 to t9 are identified from data of the sensing signals stored in the storage unit 104. The sampling timings t1 to t9 are set with respect to the divided equal sections between the sampling timing t0 and the sampling timing t10.

In a fourth step S4, the following is conducted. After the calculating unit 103 obtains the sensing values y1 to y9 corresponding to sampling times t1 to t9, a straight line equation representing a straight line that runs through the two circled points of (t1, y1) and (t9, y9) in FIG. 16 is calculated with an equation (1) shown below. This is to obtain target inclination angle information, which is obtained by a straight line approximation of sensed inclination angles of the moving member 17 corresponding to the outputted sensing signals (i.e., inclination angle information). An obtained straight line (i.e., approximate straight line) equation is determined as the target inclination angle information.

$$y = a \times t + b$$
$$= (y9-y1)/0.8 \times t + y1 \ ... \ (1)$$

It is to be noted that calculating a straight line equation running through points of (t0, y0) and (t10, y10) is also possible. However, in the inclining device according to an embodiment of the present invention, it is important to obtain an approximate straight line within an effective area of scanning that is an area within bold lines in FIG. 11. An area that is outside the effective area of scanning is not employed. The area that is outside of the effective area of scanning corresponds to points of (t0, y0) and (t10, y10) is not employed.

In a fifth step S5, the following is conducted. Target values (i.e., target inclination angles) of the sampling timings t2 to t8 may be determined from the above-described equation of the straight line obtained as the target inclination angle information. With the following equations (2-1) to (2-9), absolute values of differences $\Delta y2$ to $\Delta y8$ are calculated, respectively. The absolute values of differences $\Delta y2$ to $\Delta y8$ correspond to absolute values of differences between the sensing values y2 to y8 of the sampling timings t2 to t8 and the target values of the sampling timings t2 to t8.

$$\Delta y2 = |y2 - ((y9-y1)/0.8 \times 0.2 + y1)| \ ... \ (2-1)$$
$$\Delta y3 = |y3 - ((y9-y1)/0.8 \times 0.3 + y1)| \ ... \ (2-3)$$
$$...$$
$$\Delta y9 = |y8 - ((y9-y1)/0.8 \times 0.8 + y1)| \ ... \ (2-9)$$

In a sixth step S6, the following is conducted. For example, with an equation (3) shown below, an allowable value yA is calculated. Then, determination of whether or not the obtained absolute values of differences $\Delta y2$ to $\Delta y8$ exceed the permissible value yA is conducted. When the obtained absolute values of differences $\Delta y2$ to $\Delta y8$ do not exceed the permissible value yA (corresponding to NO in S6), the sensing signals are determined to have a linearity that is within a permissible range. Thus, the adjustment process described later is not conducted. Accordingly, operation ends. When the obtained absolute values of differences $\Delta y2$ to $\Delta y8$ exceed the permissible value yA (corresponding to YES in S6), the sensing signals are determined to be non-linear. Thus, the adjustment process is conducted. It is to be noted that the permissible value yA, in the inclining device according to an embodiment of the present invention, is set to 5% of y1 to y9 of the effective area of scanning. However, appropriate setting is set according to various conditions.

$$yA = 0.05 \times (y9-y1) \ ... \ (3)$$

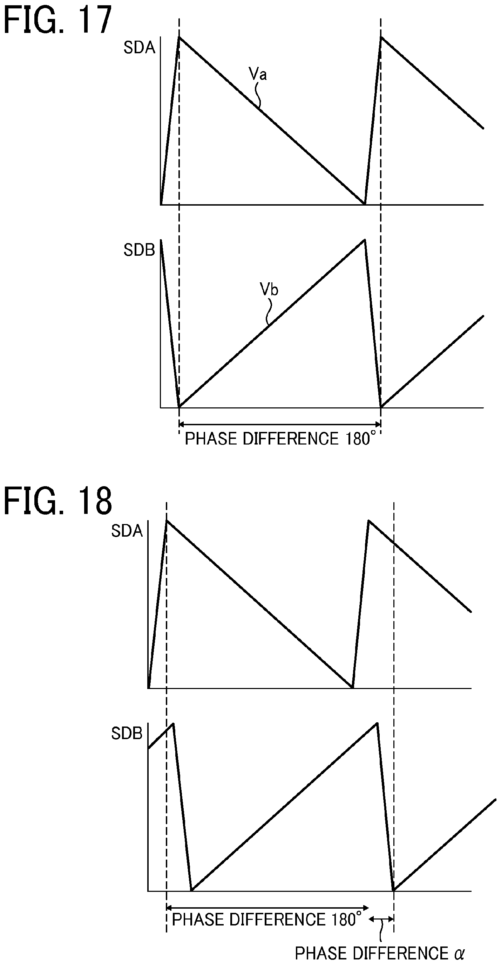

In the inclining device according to an embodiment of the present invention, as shown in FIG. 17, initially, waveforms and phases of the first sub-scanning driving signal Va and the second sub-scanning driving signal Vb are 180 degree inversions of each other. In a seventh step S7, the following is conducted. When repeatedly conducting the inclining action of the mirror 17 formed on the moving member 17, in the sub-scanning direction, by driving the driving piezoelectric elements 20 to 23 with the first sub-scanning driving signal Va and the second sub-scanning driving signal Vb, non-linearity of the sensing signals outputted from the sensing piezoelectric elements 30 to 35 may occur. When the sensing signals outputted from the sensing piezoelectric elements 30 to 35 are determined to be non-linear (corresponding to YES in S6), the adjustment process is conducted. The adjustment process is a phase difference changing process in which the 180 degree phase difference of the first sub-scanning driving signal Va and the second sub-scanning driving signal Vb is shifted. When the phase difference changing process is conducted, the 180 degree phase difference of the first sub-scanning driving signal Va and the second sub-scanning driving signal Vb is shifted by an amount of an adjustment value $\alpha$ as shown in FIG. 18. More specifically, with respect to the initial 180 degree phase difference, there occurs an increase by the amount of the adjustment value $\alpha$.

When the phase difference changing process is conducted and the 180 degree phase difference of the first sub-scanning driving signal Va and the second sub-scanning driving signal Vb is shifted, relative change occurs between elastic deformation states of the above-described two combinations driven by the first sub-scanning driving signal Va and the second sub-scanning driving signal Vb. Accordingly, a degree of non-linearity of the sensing signals is confirmed to change. It is difficult to predict how the degree of non-linearity of the sensing signals changes due to various factors being involved. However, by gradually shifting the initial 180 degree phase difference of the first sub-scanning driving signal Va and the second sub-scanning driving signal Vb in increments of the amount of the adjustment value $\alpha$, a linearity within the permissible range may be found. In the inclining device according to an embodiment of the present invention, the change according to time of the sensing signals are a high precision reflection of the change according to time of the actual inclination angles of the mirror 17, formed on the moving member 17, in the sub-scanning direction. Accordingly, when the sensing signals exhibit the linearity within the permissible range, the change according to time of the actual inclination angles of the mirror 17M also exhibits linearity. With the above-described phase difference changing process, adjustment of the inclining action of the mirror 17M is obtained. More specifically, the inclining action of the mirror 17M is adjusted so that the inclining action is conducted at practically the constant rate between the start arrangement (i.e., the time T0 shown in FIG. 12) of the moving member 17, including the mirror 17M, in regard to the fixing frame 11 to the end arrangement (i.e., the time T4 shown in FIG. 12) of the moving member 17, including the mirror 17M, in regard to the fixing frame 11.

After conducting the phase difference changing process of the seventh step S7, the processing of the adjustment process returns to the first step S1 and starts again. More specifically, the phase difference changing process of the seventh step S7 is repeated until the absolute values of differences Δy2 to Δy8, obtained from the sensing signals, become the permissible value yA or less. Accordingly, with respect to the initial 180 degree phase difference of the first sub-scanning driving signal Va and the second sub-scanning driving signal Vb, there occurs cumulative addition of the increase by the amount of the adjustment value $\alpha$. According to experimentation, the amount of the adjustment value $\alpha$ may be, for example, less than 0.1 degrees.

[Another Example]

The following is a description of another example of the adjustment process in the inclining device according to an embodiment of the present invention.

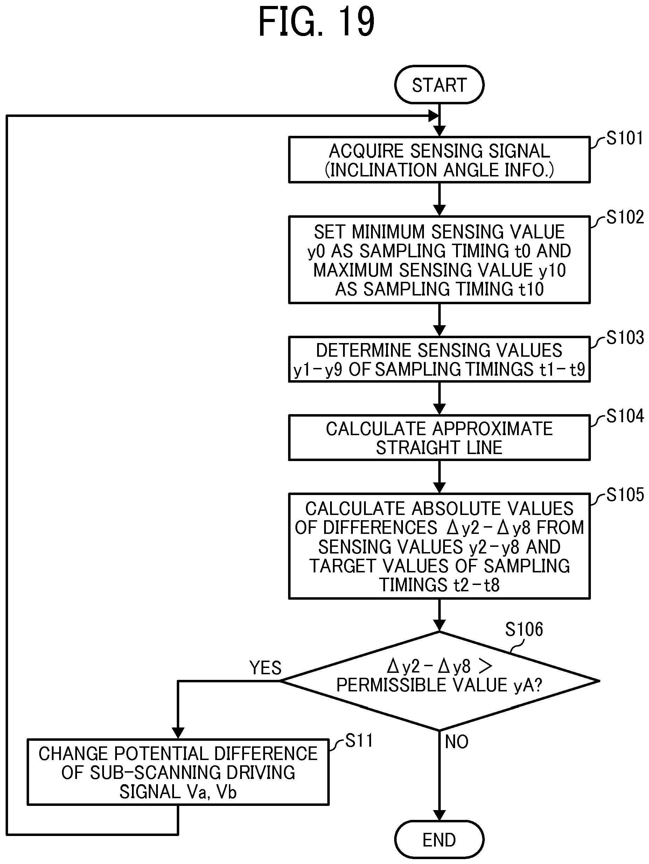

FIG. 19 is a flow chart of the another example of the process of the adjustment process in the inclining device according to an embodiment of the present invention.

The processing of another first step S101 to another sixth step S106 of the another example is the same as the first step S1 to the sixth step S6 in the above-described example of processing of the adjustment process. In the processing of the another example, the adjustment process of another seventh step S11 is different to the phase difference changing process of the seventh step S7. More specifically, the adjustment process that is conducted when the the absolute values of differences Δy2 to Δy8, obtained from the sensing signals, exceed the permissible value yA is different.

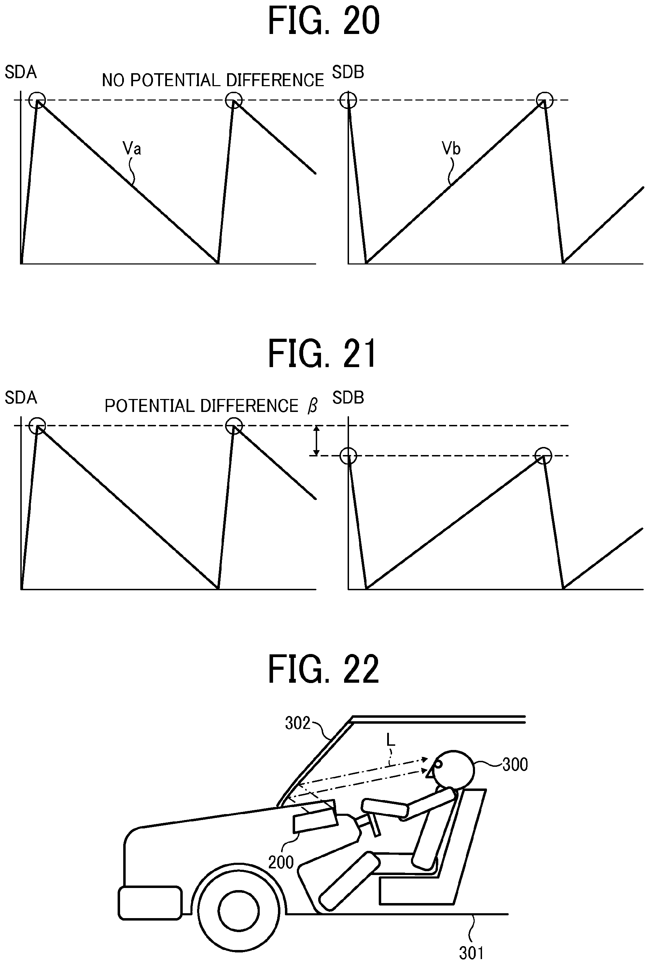

In the another example, as shown in FIG. 17, initially, waveforms and phases of the first sub-scanning driving signal Va and the second sub-scanning driving signal Vb are 180 degree inversions of each other. Maximum values of the first sub-scanning driving signal Va and the second sub-scanning driving signal Vb are the same as shown in FIG. 20. In the another seventh step S11, the following is conducted. When repeatedly conducting the inclining action of the mirror 17 formed on the moving member 17, in the sub-scanning direction, by driving the driving piezoelectric elements 20 to 23 with the first sub-scanning driving signal Va and the second sub-scanning driving signal Vb, non-linearity of the sensing signals outputted from the sensing piezoelectric elements 30 to 35 may occur. When the sensing signals outputted from the sensing piezoelectric elements 30 to 35 are determined to be non-linear (corresponding to YES in S106), the adjustment process is conducted. The adjustment process is an electric potential difference changing process in which an electric potential difference of the maximum value of the first sub-scanning driving signal Va and the maximum value of the second sub-scanning driving signal Vb is changed. When the electric potential difference changing process is conducted, the electric potential difference of the maximum value of the first sub-scanning driving signal Va and the maximum value of the second sub-scanning driving signal Vb is changed by an amount of an adjustment value $\beta$ as

shown in FIG. 21. More specifically, with respect to the initial electric potential difference, there occurs an increase by the amount of the adjustment value β. According to experimentation, the amount of the adjustment value β may be, for example, less than 10 mV.

It is to be noted that in the another example, the maximum value of the second sub-scanning driving signal Vb is changed to change the electric potential difference. However, instead of changing the maximum value of the second sub-scanning driving signal Vb, the maximum value of the first sub-scanning driving signal Va may be changed to change the electric potential difference. Further, both maximum values of the first sub-scanning driving signal Va and the second sub-scanning driving signal Vb may be changed to change the electric potential difference.

When the electric potential difference changing process is conducted and the electric potential difference of the maximum value of the first sub-scanning driving signal Va and the maximum value of the second sub-scanning driving signal Vb is changed, relative change occurs between elastic deformation states of the above-described two combinations driven by the first sub-scanning driving signal Va and the second sub-scanning driving signal Vb. Accordingly, a degree of non-linearity of the sensing signals is confirmed to change. It is difficult to predict how the degree of non-linearity of the sensing signals changes due to various factors being involved. However, by gradually shifting the initial electric potential difference of the maximum value of the first sub-scanning driving signal Va and the maximum value of the second sub-scanning driving signal Vb in increments of the amount of the adjustment value β, a linearity within the permissible range may be found. With the above-described electric potential difference changing process, adjustment of the inclining action of the mirror 17M is obtained. More specifically, the inclining action of the mirror 17M is adjusted so that the inclining action is conducted at practically the constant rate between the start arrangement (i.e., the time T0 shown in FIG. 12) of the moving member 17, including the mirror 17M, in regard to the fixing frame 11 to the end arrangement (i.e., the time T4 shown in FIG. 12) of the moving member 17, including the mirror 17M, in regard to the fixing frame 11.

In another embodiment, the correction operation performed by the inclining device according to an embodiment of the present invention includes both the phase difference changing process of the seventh step S7 and the electric potential difference changing process of the another seventh step S11. For example, a method as follows is possible. The phase difference changing process is conducted with an adjustment value α of 0.2 degrees to make a rough adjustment. Then, the electric potential difference changing process is conducted with an adjustment value β to make a fine adjustment. To make the adjustment value α of the phase difference finer, there is a need to make the sampling timings set by the calculating unit 103 finer. Implementing this is comparatively difficult. By contrast, the adjustment value β of the electric potential difference may be made finer by employing a large bit number D/A converter for the D/A converter 105. Implementing this is comparatively easy.

In the inclining device according to an embodiment of the present invention, adjustment with respect to the first sub-scanning driving signal Va and the second sub-scanning driving signal Vb is conducted to make the sensing signals exhibit the linearity within the permissible range. More specifically, adjustment with respect to the first sub-scanning driving signal Va and the second sub-scanning driving signal Vb is conducted to make the change according to time of the actual inclination angles of the mirror 17M, in the sub-scanning direction, exhibit the linearity within the permissible range. However, the adjustment process may be also employed to optimize the first sub-scanning driving signal Va and the second sub-scanning driving signal Vb.

The adjustment process employed for optimization may be as follows. When the sensing signals outputted from the sensing piezoelectric elements 30 to 35 are determined to be non-linear, first, the adjustment value α of the phase difference is increased by repeating the phase difference changing process. Accordingly, among each phase difference obtained with each repetition, a phase difference in which the absolute values of differences Δy2 to Δy8 is a minimum value is determined. More specifically, the phase difference changing process is repeated until change of the absolute values of differences Δy2 to Δy8 changes from decrease to increase, and the phase difference at the change from decrease to increase is determined. The phase difference of the first sub-scanning driving signal Va and the second sub-scanning driving signal Vb is set with the phase difference determined in the above-described manner. Next, the adjustment value β of the electric potential difference is increased by repeating the electric potential difference changing process. Accordingly, among each electric potential difference obtained with each repetition, an electric potential difference in which the absolute values of differences Δy2 to Δy8 is a minimum value is determined. More specifically, the electric potential difference changing process is repeated until change of the absolute values of differences Δy2 to Δy8 changes from decrease to increase, and the electric potential difference at the change from decrease to increase is determined. The electric potential difference of the maximum value of the first sub-scanning driving signal Va and the maximum value of the second sub-scanning driving signal Vb is set with the electric potential difference determined in the above-described manner. With the above-described adjustment process employed for optimization, optimization of a degree of linearity of the sensing signals is obtained by adjusting the electric potential difference of the maximum value of the first sub-scanning driving signal Va and the maximum value of the second sub-scanning driving signal Vb. More specifically, with the above-described adjustment process employed for optimization, optimization of a degree of linearity of the change according to time of the actual inclination angles of the mirror 17M, in the sub-scanning direction, is obtained.

The following is a detailed description of a head-up display (hereinafter referred to as HUD) for an automobile serving as a projection-type displaying apparatus. The projection-type displaying apparatus is an example of the image displaying apparatus including the optical scanner that is the actuator driving system employing the inclining device according to an embodiment of the present invention.

FIG. 22 is a schematic view of an example of a configuration of the HUD for the automobile including the optical scanner that is the actuator driving system employing the inclining device according to an embodiment of the present invention.

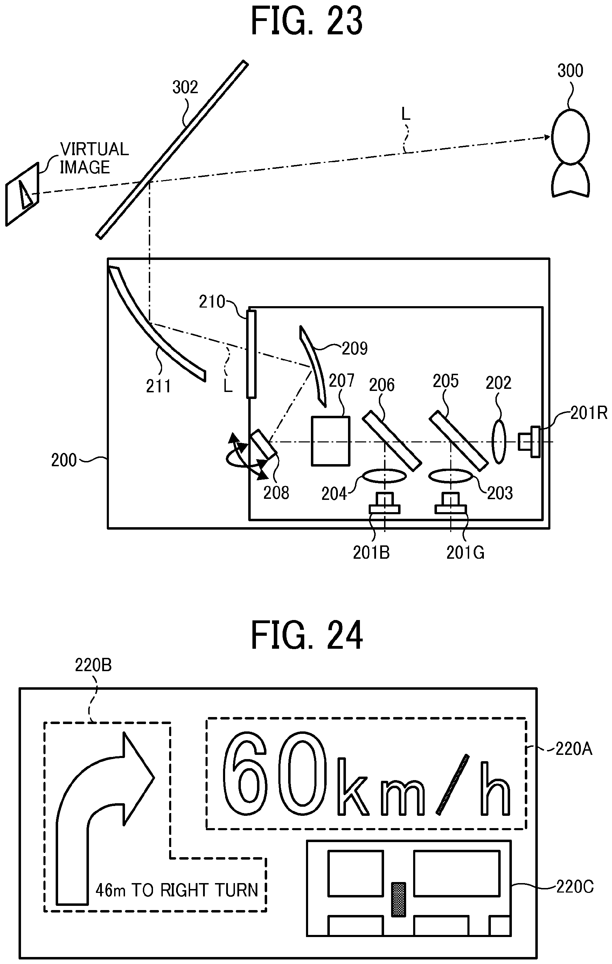

FIG. 23 is a schematic view of an example of a configuration of the inside of the HUD for the automobile including the optical scanner that is the actuator driving system employing the inclining device according to an embodiment of the present invention.

A HUD 200 for an automobile is provided, for example, within a dashboard of an automobile 301. A projecting light L, that is an image light emitted from the HUD 200 within the dashboard, is reflected at a front glass 302 towards a driver 300 that is a user. Accordingly, the driver 300 can see, as a virtual image, a navigation image as shown in FIG. 24. It is to be noted that a configuration as follows is also possible. A combiner that reflects a projecting light is further provided at an inner surface of the front glass 302. Accordingly, the driver 300 can see a virtual image due to the reflected projecting light from the combiner.

In the navigation image shown in FIG. 24, speed ("60 km/h" in FIG. 24) of the automobile 301 is displayed in a first display area 220A. Further, a navigation from a car navigation device is displayed in a second display area 220B. The navigation in FIG. 24 is a right-turn instruction image that indicates direction of turning, at a next street corner, and a distance "46 m" that indicates the distance to the next street corner is displayed. In a third display area 220C, a map image (e.g., map image of an area around the automobile) from the car navigation device is displayed.

The HUD 200 for the automobile includes a red laser light source 201R, a green laser light source 201G, a blue laser light source 201B, a first collimator lens 202, a second collimator lens 203, a third collimator lens 204, a first dichroic mirror 205, a second dichroic mirror 206, a light quantity adjustor 207, an optical scanner 208, a free curving surface shape mirror 209, a screen 210, and a projection mirror 211. The first collimator lens 202, the second collimator lens 203, and the third collimator lens 204 are provided with respect to the red laser light source 201R, the green laser light source 201G, and the blue laser light source 201B, respectively.

In the HUD 200 for the automobile, the HUD 200 for the automobile projects an intermediate image, that is displayed on the screen 210, to the front glass 302. Accordingly, the driver 300 can see, as the virtual image, the intermediate image. Laser lights emitted from the red laser light source 201R, the green laser light source 201G, and the blue laser light source 201B are made approximately parallel light beams with the first collimator lens 202, the second collimator lens 203, and the third collimator lens 204, respectively. Then, the approximately parallel light beams are combined into a combined laser light with the first dichroic mirror 205 and the second dichroic mirror 206. The combined laser light is scanned two-dimensionally with the mirror 17M of the optical scanner 208 after an amount of light of the combined laser light is adjusted with the light quantity adjustor 207. The projecting light L, corresponding to the combined laser light that is scanned two-dimensionally with the optical scanner 208, is concentrated on the screen 210 after correcting distortion and after being reflected by the free curving surface shape mirror 209. Accordingly, the intermediate image is displayed.

The optical scanner 208 employs the above-described actuator driving system. Accordingly, by driving the driving piezoelectric elements 20 to 25 with the first sub-scanning driving signal Va and the second sub-scanning driving signal Vb, the mirror 17M formed on the moving member 17 inclines in the main scanning direction and the sub-scanning direction. Accordingly, the projecting light L that is projected to the mirror 17M is scanned two-dimensionally (e.g., raster scanning). A control of driving the mirror 17M is conducted in sync with emission timings of the red laser light source 201R, the green laser light source 201G, and the blue laser light source 201B.

Application of the actuator driving system is not limited to the above-described HUD 200 for the automobile. The actuator driving system may be applied to optical scanners of other types of image displaying apparatuses. Further, application of the actuator driving system is not limited to optical scanners of image displaying apparatuses. The actuator driving system may be widely applied to optical scanners in general.

The actuator driving system serving as the optical scanner scans incident light, from one direction, with the inclining action of the mirror 17M. However, the actuator driving system is not limited to such. For example, the actuator driving system may be employed as a light receiving device in which incident light, from multiple directions, with respect to the mirror 17M is guided to a light receiving portion provided at a specific place with the inclining action of the mirror 17M.

Further, the actuator driving system may be applied to applicable devices and is not limited to application to optical scanners.

The actuator driving system is employed in the optical scanner that scans two-dimensionally. However, the actuator driving system may be employed in an optical scanner in which a configuration of the actuator driving system, with respect to the sub-scanning direction, and action conducts one-dimensional scanning.

In the inclining device according to an embodiment of the present invention, an amount of deformation of the elastically deforming portions 12 to 16 of the frame plate 10 are sensed by the sensing piezoelectric elements 30 to 33. However, sensing is not limited to such elements. For example, sensing may be conducted with other sensing units such as a strain gauge.

In the inclining device according to an embodiment of the present invention, elastic deformation of the elastically deforming portions 12 to 16 are obtained by generating driving force with the driving piezoelectric elements 20 to 25. However, driving force is not limited to such. For example, the driving force, to elastically deform the elastically deforming portions 12 to 16, may be electrostatic force or magnetic force.

The description thus far is one example of an embodiment of the present invention. Each aspect of the present invention exhibits particular effects as follows.

[Aspect A]

An inclining action device including a moving member (17); a fixing frame (11) elastically supporting the moving member (17); a driving force applying unit (e.g., the driving piezoelectric elements 20 to 23) to apply driving force to cause the moving member (17) to repeatedly perform an inclination action, wherein the inclination action changes an inclination angle of the moving member (17) with respect to the fixing frame(11) from the inclination angle at a start arrangement of the moving member (17) to the inclination angle at an end arrangement of the moving member (17); a driving signal generating unit (e.g., the calculating unit 103 to generate the first sub-scanning driving signal Va and the second sub-scanning driving signal Vb, the storage unit 104, the D/A converter 105, and the drive AMP 106) to generate a driving signal to drive the driving force applying unit; an inclination angle information sensing unit (e.g., the sensing piezoelectric elements 30 to 33, the sense AMP 101, and the A/D converter 102) to sense the inclination angle of the moving member (17) to obtain inclination angle information indicating the sensed inclination angle of the moving member that changes over time in one inclination action; and an adjustment processing unit (e.g., the calculating unit 103) to correct the driving signal generated by the driving signal generating unit so as to suppress fluctuations in the sensed inclination angle with respect to a target inclination angle in one inclination action.

From aspect A, the following particular effect is obtained. By adjusting the driving signal with the adjustment process, difference between the inclination angle of the moving member (17) and the target inclination angle is made small. Accordingly, fluctuation in the inclination angle of the moving member with respect to the desired inclination angle, which can be observed over time in every inclining action, is suppressed and the appropriate inclination angle of the moving member is achieved.

[Aspect B]

The inclining action device of aspect A in which the driving force applying unit employs at least two driving elements (e.g., combinations: the first driving piezoelectric element 20 and the fourth driving piezoelectric element 23; the second driving piezoelectric element 21 and the third driving piezoelectric element 22) to apply the driving force to repeatedly perform the inclining action on the moving member (17). The driving signal generating unit generates a driving signal (e.g., the first sub-scanning driving signal Va, the second sub-scanning driving signal Vb) independently for each of the at least two driving elements. The adjustment processing unit (103) is further configured to change a phase difference (e.g., phase difference changing process) between the driving signals generated by the driving signal generating unit.

From aspect B, the following particular effect is obtained. By changing the phase difference between the first sub-scanning driving signal Va and the second sub-scanning driving signal Vb, relative change occurs to the elastic deformation states of the elastically deforming portions that are elastically deformed by the driving elements driven by the first sub-scanning driving signal Va and the second sub-scanning driving signal Vb. Accordingly, a degree of difference between the inclination angle of the moving member (17) and the target inclination angle is changed. Thus, with the phase difference changing process, it is possible to make the degree of difference between the inclination angle of the moving member (17) and the target inclination angle small.

[Aspect C]

The inclining action device of aspect A in which the driving force applying unit employs at least two driving elements (e.g., combinations: the first driving piezoelectric element 20 and the fourth driving piezoelectric element 23; the second driving piezoelectric element 21 and the third driving piezoelectric element 22) to apply the driving force to repeatedly perform the inclining action on the moving member (17). The driving signal generating unit generates a driving signal (e.g., the first sub-scanning driving signal Va, the second sub-scanning driving signal Vb) independently for each of the at least two driving elements. The adjustment processing unit (103) is further configured to change a difference (e.g., electric potential difference changing process) between maximum values of the driving signals or change a difference (e.g., electric potential difference changing process) between minimum values of the driving signals generated by the driving signal generating unit.

From aspect C, the following particular effect is obtained. By changing the difference between the maximum values of the first sub-scanning driving signal Va and the second sub-scanning driving signal Vb or by changing the difference between the minimum values of the first sub-scanning driving signal Va and the second sub-scanning driving signal Vb, relative change occurs to the elastic deformation states of the elastically deforming portions that are elastically deformed by the driving elements driven by the first sub-scanning driving signal Va and the second sub-scanning driving signal Vb. Accordingly, the degree of difference between the inclination angle of the moving member (17) and the target inclination angle is changed. Thus, with the electric potential difference changing process, it is possible to make the degree of difference between the inclination angle of the moving member (17) and the target inclination angle small.

[Aspect D]

The inclining action device of aspect C in which the adjustment processing unit (103) is further configured to change a phase difference (e.g., phase difference changing process) between the driving signals generated by the driving signal generating unit.

From aspect D, the following particular effect is obtained. By using both the phase difference changing process and the electric potential difference changing process, it is possible to make the degree of difference between the inclination angle of the moving member (17) and the target inclination angle even smaller.

[Aspect E]

The inclining action device of any of aspect A through D in which the inclining action of the moving member (17) with respect to the fixing frame (11) is conducted at a constant rate between the start arrangement (e.g., T0 or t0) of the moving member to the end arrangement (T4 or tlO) of the moving member (17). The adjustment processing unit (103) obtains an approximate straight line by a straight line approximation of the sensed inclination angle (e.g., the sensing values y0 to y10), and corrects the driving signal so as to minimize a difference (e.g., the absolute values of differences $\Delta y2$ to $\Delta y8$) between the approximate straight line serving as the target inclination angle information and the sensed inclination angle.

From aspect E, the following particular effect is obtained. Using the adjustment process that adjusts the first sub-scanning driving signal Va and the second sub-scanning driving signal Vb in combination with other adjustment processes becomes easier.

[Aspect F]

The inclining action device of aspect E in which the adjustment processing unit (103) is further configured to determine whether or not an amount of fluctuation (e.g., the absolute values of differences $\Delta y2$ to $\Delta y8$) in the sensed inclination angle with respect to the obtained approximate straight line exceeds a permissible amount (e.g., the permissible value yA). Then, correct the driving signal when the determination indicates that the amount of fluctuation exceeds the permissible amount, and not correct the driving signal when the determination indicates that the amount of fluctuation does not exceed the permissible amount.

From aspect F, the following particular effect is obtained. The adjustment process is only conducted when the permissible amount is exceeded. Accordingly, frequency of conducting the adjustment process is reduced, and processing load may be reduced.

[Aspect G]

The inclining action device of aspect E or aspect F, further including a different direction inclining unit (e.g., the fifth elastically deforming portion 16, the fifth driving piezoelectric element 24, the sixth driving piezoelectric element 25) to perform, a number of times, a different direction inclining action (e.g., the main scanning direction, X-direction) with respect to a direction (e.g., the sub-scanning direction, Y-direction) of the inclining action. The driving signal generating unit causes the different direction inclining unit to perform the different direction inclining action during the inclining action being performed between the start arrangement(e.g., T0 or t0) to the end arrangement (e.g., T4 or t10) of the moving member.

From aspect G, the following particular effect is obtained. Two-dimensional inclining action of the moving member is obtained. In the above-described example according to an embodiment of the present invention, the number of times the different direction inclining action is conducted is more than the number of times of the inclining action. Thus, a frequency of the different direction inclining action is often made the resonant frequency. Accordingly, a frequency of the inclining action cannot be made the resonant frequency. To make the inclining action large, there is a need to employ the two or more driving elements and the driving signal for each of the two or more driving elements to drive the two or more driving elements. As described above, it is difficult to completely match the generated driving signals with preferable driving signals. In addition, driving force generated by each of the two or more driving elements and degree of elastic deformations of the elastically deforming portions are not uniform. Accordingly, the occurrence of the fluctuation in the inclination angle of the moving member with respect to the desired inclination angle, which can be observed over time in every inclining action, is likely. Further, when the frequency of the inclining action cannot be made the resonant frequency, elastic vibration due to the resonant frequency easily occurs. Accordingly, the occurrence of the fluctuation in the inclination angle of the moving member with respect to the desired inclination angle, which can be observed over time in every inclining action, is likely.

With aspect G, in regards to a configuration of the above-described example according to an embodiment of the present invention, it is possible to make the degree of difference of the fluctuation in the inclination angle of the moving member with respect to the desired inclination angle, which can be observed over time in every inclining action, small.

[Aspect H]

An optical scanner (e.g., optical scanner 208) including a light outputting unit (e.g., the red laser light source 201R, the green laser light source 201G, and the blue laser light source 201B) to output light, and a scanning unit to scan the outputted light from the light outputting unit. The scanning unit including the inclining action device of any of aspects A through G. The scanning unit scans the outputted light from the light outputting unit with an optical member (e.g., the mirror 17M) provided at the moving member (17) by repeatedly conducting inclining action of the moving member (17) with the inclining action device of any of aspects A through G.

From aspect H, the following particular effect is obtained. In a case of inappropriate optical scanning by the optical member, adjustment is conducted and appropriate optical scanning is obtained. More specifically, when there occurs the fluctuation in the inclination angle of the moving member with respect to the desired inclination angle, which can be observed over time in every inclining action, adjustment is conducted and appropriate optical scanning is obtained.

[Aspect I]

An image displaying apparatus (e.g., HUD 200 for an automobile) including an image scanning light outputting unit (e.g., the red laser light source 201R, the green laser light source 201G, and the blue laser light source 201B) to output an image scanning light (e.g., the projecting light L) based on an information of an image, and a two dimensional scanning unit to scan the outputted image scanning light (e.g., the projecting light L) from the image scanning light outputting unit. The two-dimensional scanning unit including the inclining action device of aspect G. The two-dimensional scanning unit scans, two-dimensionally, the outputted image scanning light from the image scanning light outputting unit with an optical member (17M) provided at the moving member by conducting the inclining action of the moving member corresponding to a vertical direction (e.g., the sub-scanning direction) of the image and conducting, with the different direction inclining unit, the different direction inclining action of the moving member corresponding to a horizontal direction (e.g., the main scanning direction) of the image.

From aspect I, the following particular effect is obtained. A high quality image in which there are little sparse and dense portions in an image scanning line is obtained.

**Claims**

1.  An inclining action device, comprising:

> a moving member (17);
> a fixing frame (11) elastically supporting the moving member (17);
> a driving force applying unit configured to apply driving force to cause the moving member (17) to repeatedly perform an inclination action, wherein the inclination action changes an inclination angle of the moving member with respect to the fixing frame (11) from the inclination angle at a start arrangement of the moving member to the inclination angle at an end arrangement of the moving member;
> a driving signal generating unit configured to generate a driving signal to drive the driving force applying unit;
> an inclination angle information sensing unit configured to sense the inclination angle of the moving member (17) to obtain inclination angle information indicating the sensed inclination angle of the moving member (17) that changes over time in one inclination action; and

an adjustment processing unit (103) configured to correct the driving signal generated by the driving signal generating unit so as to suppress fluctuations in the sensed inclination angle with respect to a target inclination angle in one inclination action;

wherein

the driving force applying unit employs at least two driving elements to apply the driving force to repeatedly perform the inclining action on the moving member (17),

the driving signal generating unit is configured to generate a driving signal independently for each of the at least two driving elements, **characterised in that**:

the adjustment processing unit (103) is further configured to change a phase difference between the driving signals generated by the driving signal generating unit.

2. The inclining action device of claim 1, wherein

the adjustment processing unit (103) is further configured to change a difference between maximum values of the driving signals or change a difference between minimum values of the driving signals generated by the driving signal generating unit.

3. The inclining action device of claim 1 or 2, wherein the inclining action of the moving member (17) with respect to the fixing frame (11) is **characterised by** a constant rate between the start arrangement of the moving member to the end arrangement of the moving member (17), and

wherein the adjustment processing unit (103) is configured to obtain an approximate straight line by a straight line approximation of the sensed inclination angle, and corrects the driving signal so as to minimize a difference between the approximate straight line serving as the target inclination angle and the sensed inclination angle.

4. The inclining action device of claim 3, wherein the adjustment processing unit (103) is further configured to determine whether or not an amount of fluctuation in the sensed inclination angle with respect to the obtained approximate straight line exceeds a permissible amount, and

correct the driving signal when the determination indicates that the amount of fluctuation exceeds the permissible amount, and

not correct the driving signal when the determination indicates that the amount of fluctuation does not exceed the permissible amount.

5. The inclining action device of claim 3 or claim 4, further comprising:

a different direction inclining unit configured to perform, a number of times, a different direction inclining action on the moving member,

wherein the driving signal generating unit causes the different direction inclining unit to perform the different direction inclining action during the inclining action being performed between the start arrangement to the end arrangement of the moving member.

6. An optical scanner (208), comprising:

a light outputting unit (201R, 201G, 201B) to output light; and

a scanning unit configured to scan the outputted light from the light outputting unit (201R, 201G, 201B), the scanning unit including the inclining action device of any of claims 1 through 5,

wherein the scanning unit is configured to scan the outputted light from the light outputting unit (201R, 201G, 201B) with an optical member (17M) provided at the moving member (17) by repeatedly conducting inclining action of the moving member (17) with the inclining action device of any of claims 1 through 5.

7. An image displaying apparatus (200), comprising:

an image scanning light outputting unit (201R, 201G, 201B) configured to output an image scanning light based on an information of an image; and

a two-dimensional scanning unit configured to scan the outputted image scanning light from the image scanning light outputting unit (201R, 201G, 201B), the two-dimensional scanning unit including the inclining action device of claim 5,

wherein the two-dimensional scanning unit is configured to scan the outputted image scanning light from the image scanning light outputting unit (201R, 201G, 201B) with the optical member (17M) provided at the moving member (17) by conducting the inclining action of the moving member (17) corresponding to a vertical direction of the image and conducting, with the different direction inclining unit, the different direction inclining action of the moving member (17) corresponding to a horizontal direction of the image.

**Patentansprüche**

1. Neigungsaktionsvorrichtung, umfassend:

    ein Bewegungselement (17);
    einen Befestigungsrahmen (11), der das Bewegungselement (17) elastisch stützt;
    eine Antriebskraftausübungseinheit, die konfiguriert ist, Antriebskraft auszuüben, um das Bewegungselement (17) dazu zu veranlassen, eine Neigungsaktion wiederholt durchzuführen, wobei die Neigungsaktion einen Neigungswinkel des Bewegungselements in Bezug auf den Befestigungsrahmen (11) von dem Neigungswinkel bei einer Startanordnung des Bewegungselements zu dem Neigungswinkel bei einer Endanordnung des Bewegungselements ändert;
    eine Antriebssignalerzeugungseinheit, die konfiguriert ist, ein Antriebssignal zum Antreiben der Antriebskraftausübungseinheit zu erzeugen;
    eine Neigungswinkelinformationen-Abtasteinheit, die konfiguriert ist, den Neigungswinkel des Bewegungselements (17) abzutasten, um Neigungswinkelinformationen zu erhalten, die den abgetasteten Neigungswinkel des Bewegungselements (17) angeben, der sich im Laufe der Zeit in einer Neigungsaktion ändert; und
    eine Einstellverarbeitungseinheit (103), die konfiguriert ist, das durch die Antriebssignalerzeugungseinheit erzeugte Antriebssignal zu korrigieren, um Schwankungen in dem abgetasteten Neigungswinkel in Bezug auf einen Zielneigungswinkel in einer Neigungsaktion zu unterdrücken;
    wobei
    die Antriebskraftausübungseinheit mindestens zwei Antriebselemente zum Ausüben der Antriebskraft einsetzt, um die Neigungsaktion an dem Bewegungselement (17) wiederholt durchzuführen,
    die Antriebssignalerzeugungseinheit konfiguriert ist, ein Antriebssignal unabhängig für jedes der mindestens zwei Antriebselemente zu erzeugen,
    **dadurch gekennzeichnet, dass**:
    die Einstellverarbeitungseinheit (103) ferner konfiguriert ist, eine Phasendifferenz zwischen den durch die Antriebssignalerzeugungseinheit erzeugten Antriebssignalen zu ändern.

2. Neigungsaktionsvorrichtung nach Anspruch 1, wobei
    die Einstellverarbeitungseinheit (103) ferner konfiguriert ist, eine Differenz zwischen maximalen Werten der Antriebssignale zu ändern oder eine Differenz zwischen minimalen Werten der durch die Antriebssignalerzeugungseinheit erzeugten Antriebssignale zu ändern.

3. Neigungsaktion nach Anspruch 1 oder 2, wobei die Neigungsaktion des Bewegungselements (17) in Bezug auf den Befestigungsrahmen (11) durch eine konstante Rate zwischen der Startanordnung des Bewegungselements zu der Endanordnung des Bewegungselements (17) gekennzeichnet ist und
    wobei die Einstellverarbeitungseinheit (103) konfiguriert ist, eine ungefähr gerade Linie durch eine geradlinige Annäherung des abgetasteten Neigungswinkels zu erhalten, und das Antriebssignal korrigiert, um eine Differenz zwischen der ungefähr geraden Linie, die als der Zielneigungswinkel dient, und dem abgetasteten Neigungswinkel zu minimieren.

4. Neigungsaktionsvorrichtung nach Anspruch 3, wobei die Einstellverarbeitungseinheit (103) konfiguriert ist, zu bestimmen, ob ein Schwankungsbetrag im abgetasteten Neigungswinkel in Bezug auf die erhaltene ungefähr gerade Linie einen zulässigen Betrag überschreitet, und
    das Antriebssignal zu korrigieren, wenn die Bestimmung angibt, dass der Schwankungsbetrag den zulässigen Betrag überschreitet, und
    das Antriebssignal nicht zu korrigieren, wenn die Bestimmung angibt, dass der Schwankungsbetrag den zulässigen Betrag nicht überschreitet.

5. Neigungsaktionsvorrichtung nach Anspruch 3 oder Anspruch 4, ferner umfassend:
    eine unterschiedliche Richtungsneigungseinheit, die konfiguriert ist, eine Anzahl von Malen eine unterschiedliche Richtungsneigungsaktion an dem Bewegungselement durchzuführen,
    wobei die Antriebssignalerzeugungseinheit die unterschiedliche Richtungsneigungseinheit dazu veranlasst, die unterschiedliche Richtungsneigungsaktion durchzuführen, während die Neigungsaktion zwischen der Startanordnung zu der Endanordnung des Bewegungselements durchgeführt wird.

6. Optischer Scanner (208), umfassend:

eine Lichtausgabeeinheit (201R, 201G, 201B) zum Ausgeben von Licht; und
eine Scaneinheit, die konfiguriert ist, das ausgegebene Licht von der Lichtausgabeeinheit (201R, 201G, 201B) zu scannen, wobei die Scaneinheit die Neigungsaktionsvorrichtung nach einem der Ansprüche 1 bis 5 beinhaltet, wobei die Scaneinheit konfiguriert ist, das ausgegebene Licht von der Lichtausgabeeinheit (201R, 201G, 201B) mit einem optischen Element (17M), das an dem Bewegungselement (17) bereitgestellt ist, durch wiederholtes Ausführen von Neigungsaktion des Bewegungselements (17) mit der Neigungsaktionsvorrichtung nach einem der Ansprüche 1 bis 5 zu scannen.

7. Bildanzeigegerät (200), umfassend:

eine Bildscanlicht-Ausgabeeinheit (201R, 201G, 201B), die konfiguriert ist, ein Bildscanlicht auf Grundlage einer Information eines Bildes auszugeben; und
eine zweidimensionale Scaneinheit, die konfiguriert ist, das ausgegebene Bildscanlicht von der Bildscanlicht-Ausgabeeinheit (201R, 201G, 201B) zu scannen, wobei die zweidimensionale Scaneinheit die Neigungsaktionsvorrichtung nach Anspruch 5 beinhaltet.
wobei die zweidimensionale Scaneinheit konfiguriert ist, das ausgegebene Bildscanlicht von der Bildscanlicht-Ausgabeeinheit (201R, 201G, 201B) mit dem optischen Element (17M), das an dem Bewegungselement (17) bereitgestellt ist, durch Ausführen der Neigungsaktion des Bewegungselements (17), die einer vertikalen Richtung des Bilds entspricht, und Ausführen mit der unterschiedlichen Richtungsneigungseinheit der unterschiedlichen Richtungsneigungsaktion des Bewegungselements (17), die einer horizontalen Richtung des Bilds entspricht, zu scannen.

**Revendications**

1. Dispositif d'action d'inclinaison, comprenant :

un élément mobile (17) ;
un cadre de fixation (11) supportant élastiquement l'élément mobile (17) ;
une unité d'application de force motrice conçue pour appliquer une force motrice pour amener l'élément mobile (17) à effectuer de manière répétée une action d'inclinaison, l'action d'inclinaison changeant un angle d'inclinaison de l'élément mobile par rapport au cadre de fixation (11) de l'angle d'inclinaison à une position de départ de l'élément mobile en angle d'inclinaison à une position terminale de l'élément mobile ;
une unité de génération de signal d'entraînement conçue pour générer un signal d'entraînement pour entraîner l'unité d'application de force motrice ;
une unité de détection d'informations d'angle d'inclinaison conçue pour détecter l'angle d'inclinaison de l'élément mobile (17) pour obtenir des informations d'angle d'inclinaison indiquant l'angle d'inclinaison détecté de l'élément mobile (17) qui change avec le temps dans une action d'inclinaison ; et
une unité de traitement d'ajustement (103) conçue pour corriger le signal d'entraînement généré par l'unité de génération de signal d'entraînement de manière à supprimer des fluctuations dans l'angle d'inclinaison détecté par rapport à un angle d'inclinaison cible dans une action d'inclinaison ;
l'unité d'application de force motrice utilisant au moins deux éléments d'entraînement pour appliquer la force motrice pour effectuer de manière répétée l'action d'inclinaison sur l'élément mobile (17),
l'unité de génération de signal d'entraînement étant conçue pour générer un signal d'entraînement indépendamment pour chacun des au moins deux éléments d'entraînement,
**caractérisé en ce que** :
l'unité de traitement d'ajustement (103) est en outre conçue pour changer une différence de phase entre les signaux d'entraînement générés par l'unité de génération de signal d'entraînement.

2. Dispositif d'action d'inclinaison selon la revendication 1, dans lequel l'unité de traitement d'ajustement (103) est en outre conçue pour changer une différence entre des valeurs maximales des signaux d'entraînement ou changer une différence entre des valeurs maximales des signaux d'entraînement générés par l'unité de génération de signal d'entraînement.

3. Dispositif d'action d'inclinaison selon la revendication 1 ou 2, dans lequel l'action d'inclinaison de l'élément mobile (17) par rapport au cadre de fixation (11) est **caractérisée par** un taux constant entre la position de départ de l'élément mobile et la position terminale de l'élément mobile (17), et

l'unité de traitement d'ajustement (103) étant conçue pour obtenir une ligne droite approximative par une approximation linéaire droite de l'angle d'inclinaison détecté, et corrige le signal d'entraînement de manière à minimiser une différence entre la ligne droite approximative servant d'angle d'inclinaison cible et l'angle d'inclinaison détecté.

4. Dispositif d'action d'inclinaison selon la revendication 3, dans lequel l'unité de traitement d'ajustement (103) est en outre conçue pour déterminer si oui ou non une quantité de fluctuation de l'angle d'inclinaison détecté par rapport à la ligne droite approximative obtenue dépasse une quantité autorisée, et

corriger le signal d'entraînement lorsque la détermination indique que la quantité de fluctuation dépasse la quantité autorisée, et

ne pas corriger le signal d'entraînement lorsque la détermination indique que la quantité de fluctuation ne dépasse pas la quantité autorisée.

5. Dispositif d'action d'inclinaison selon la revendication 3 ou la revendication 4, comprenant en outre :

une unité d'inclinaison de direction différente conçue pour effectuer, un nombre de fois, une action d'inclinaison de direction différente sur l'élément mobile,

l'unité de génération de signal d'entraînement amenant l'unité d'inclinaison de direction différente à effectuer l'action d'inclinaison de direction différente pendant l'action d'inclinaison étant effectuée entre la position de départ et la position terminale de l'élément mobile.

6. Dispositif de balayage optique (208), comprenant :

une unité d'émission de lumière (201R, 201G, 201B) pour émettre la lumière ; et

une unité de balayage conçue pour balayer la lumière émise depuis l'unité d'émission de lumière (201R, 201G, 201B), l'unité de balayage comprenant le dispositif d'action d'inclinaison selon l'une quelconque des revendications 1 à 5,

l'unité de balayage étant conçue pour balayer la lumière émise depuis l'unité d'émission de lumière (201R, 201G, 201B) avec un élément optique (17M) disposé au niveau de l'élément mobile (17) par la réalisation répétée d'une action d'inclinaison de l'élément mobile (17) avec le dispositif d'action d'inclinaison selon l'une quelconque des revendications 1 à 5.

7. Appareil d'affichage d'image (200), comprenant :

une unité d'émission de lumière de balayage d'image (201R, 201G, 201B) conçue pour émettre une lumière de balayage d'image en fonction d'une information d'une image; et

une unité de balayage bidimensionnel conçue pour balayer la lumière de balayage d'image émise depuis l'unité d'émission de lumière de balayage d'image (201R, 201G, 201B), l'unité de balayage bidimensionnel comprenant le dispositif d'action d'inclinaison selon la revendication 5,

l'unité de balayage bidimensionnel étant conçue pour balayer la lumière de balayage d'image émise depuis l'unité d'émission de lumière de balayage d'image (201R, 201G, 201B) avec l'élément optique (17M) disposé au niveau de l'élément mobile (17) par la réalisation de l'action d'inclinaison de l'élément mobile (17) correspondant à une direction verticale de l'image et la réalisation, avec l'unité d'inclinaison de direction différente, de l'action d'inclinaison de direction différente de l'élément mobile (17) correspondant à une direction horizontale de l'image.

# FIG. 1

# FIG. 2

FIG. 3

FIG. 4

# FIG. 5

# FIG. 6

# FIG. 7

# FIG. 8

INCIDENT LIGHT

REFLECTED LIGHT

12

10

11

13

17M

15

14

WARPING DIRECTION

# FIG. 9

INCIDENT LIGHT

REFLECTED LIGHT

12

10

11

13

17M

15

14

WARPING DIRECTION

# FIG. 10

MD-MDG

Vd

Time ⇒ T0    T1    T2    T3    T4    T5    T6

16
100
17M

16
100
17M

16

17M

100
16
17M

17M
100

16
17M
100

16
100

17M

# FIG. 11

T0    SCANNING AREA

SUB-SCANNING DIRECTION

EFFECTIVE AREA OF SCANNING

T4

MAIN SCANNING DIRECTION

# FIG. 12

T0  SCANNING AREA  T4
(SUB-SCANNING)

# FIG. 13

T0  SCANNING AREA  T4
(SUB-SCANNING)

# FIG. 14

T0 SCANNING AREA

SUB-SCANNING DIRECTION

SPARSE

DENSE

T4

EFFECTIVE AREA OF SCANNING

MAIN-SCANNING DIRECTION

# FIG. 15

```
                    ( START )
                        │
                        ▼
  ┌──────────────────────────────────────┐  S1
  │   ACQUIRE SENSING SIGNAL             │
  │   (INCLINATION ANGLE INFO.)          │
  └──────────────────────────────────────┘
                        │
                        ▼
  ┌──────────────────────────────────────┐  S2
  │   SET MINIMUM SENSING VALUE          │
  │   y0 AS SAMPLING TIMING t0 AND       │
  │   MAXIMUM SENSING VALUE y10          │
  │   AS SAMPLING TIMING t10             │
  └──────────────────────────────────────┘
                        │
                        ▼
  ┌──────────────────────────────────────┐  S3
  │   DETERMINE SENSING VALUES           │
  │   y1−y9 OF SAMPLING TIMINGS t1−t9    │
  └──────────────────────────────────────┘
                        │
                        ▼
  ┌──────────────────────────────────────┐  S4
  │   CALCULATE APPROXIMATE              │
  │   STRAIGHT LINE                      │
  └──────────────────────────────────────┘
                        │
                        ▼
  ┌──────────────────────────────────────┐  S5
  │   CALCULATE ABSOLUTE VALUES          │
  │   OF DIFFERENCES  Δy2−Δy8 FROM       │
  │   SENSING VALUES y2−y8 AND           │
  │   TARGET VALUES OF SAMPLING          │
  │   TIMINGS t2−t8                      │
  └──────────────────────────────────────┘
                        │
                        ▼
                                              S6
            YES       ◇ Δy2−Δy8 >
         ◄─────────── PERMISSIBLE VALUE yA? ◇
         │                       │ NO
         ▼                       ▼
  ┌──────────────────────────┐  S7      ( END )
  │ CHANGE PHASE DIFFERENCE  │
  │ OF SUB-SCANNING DRIVING  │
  │ SIGNAL Va, Vb            │
  └──────────────────────────┘
```

# FIG. 16

EP 2 911 380 B1

FIG. 17

SDA

Va

SDB

Vb

PHASE DIFFERENCE 180°

FIG. 18

SDA

SDB

PHASE DIFFERENCE 180°

PHASE DIFFERENCE $\alpha$

# FIG. 19

START

ACQUIRE SENSING SIGNAL
(INCLINATION ANGLE INFO.)  ┌S101

SET MINIMUM SENSING VALUE
y0 AS SAMPLING TIMING t0 AND
MAXIMUM SENSING VALUE y10
AS SAMPLING TIMING t10  ┌S102

DETERMINE SENSING VALUES
y1-y9 OF SAMPLING TIMINGS t1-t9  ┌S103

CALCULATE APPROXIMATE
STRAIGHT LINE  ┌S104

CALCULATE ABSOLUTE VALUES
OF DIFFERENCES Δy2-Δy8 FROM
SENSING VALUES y2-y8 AND
TARGET VALUES OF SAMPLING
TIMINGS t2-t8  ┌S105

S106

Δy2-Δy8 >
PERMISSIBLE VALUE yA?

YES

NO

CHANGE POTENTIAL DIFFERENCE
OF SUB-SCANNING DRIVING
SIGNAL Va, Vb  ┌S11

END

# FIG. 20

SDA   NO POTENTIAL DIFFERENCE   SDB

Va

Vb

# FIG. 21

SDA   POTENTIAL DIFFERENCE $\beta$   SDB

# FIG. 22

# FIG. 23

VIRTUAL
IMAGE

302

L

300

210

209

211

L

207

206

205

202

201R

208

204

203

201B

201G

200

# FIG. 24

220B

220A

60km/h

46m TO RIGHT TURN

220C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010026443 A
- JP 2011107505 A
- WO 2013125233 A1